# EUROPEAN PATENT APPLICATION

(11) **EP 4 841 617 A1**
(43) Date of publication of application: **18.11.2026**
(21) Application number: 24939210.1
(22) Date of filing: 24.05.2024
(51) Int. Cl.: G09G 3/20, G09G 3/36, G02F 1/133

(54) **DISPLAY APPARATUS, CONTROL METHOD, ELECTRONIC DEVICE AND COMPUTER-READABLE STORAGE MEDIUM**

(71) Applicant: Boe Technology Group Co., Ltd., Beijing 100015 (CN); Beijing BOE Display Technology Co., Ltd., Beijing 100176 (CN)
(72) Inventor: LIU, Dong, Beijing 100176 (CN); CHEN, Dongchuan, Beijing 100176 (CN); ZHANG, Yinlong, Beijing 100176 (CN); LIAO, Yanping, Beijing 100176 (CN); SHAO, Xibin, Beijing 100176 (CN); HU, Pengfei, Beijing 100176 (CN); LI, Senwang, Beijing 100176 (CN); CHEN, Hangyu, Beijing 100176 (CN); LIU, Jiantao, Beijing 100176 (CN); ZHOU, Liugang, Beijing 100176 (CN); LIU, Rongcheng, Beijing 100176 (CN)
(74) Representative: Brötz, Helmut
(86) International application number: PCT/CN2024/095196
(87) International publication number: WO 2025/241181

(57) **Abstract**

A display apparatus, a control method, an electronic device and a computer-readable storage medium. The display apparatus (300) comprises a display substrate (301) and a source driver (320). The source driver (320) comprises a first cache module (322), a second cache module (324), a third cache module (325), an operation conversion module (323) and an output module. The operation conversion module (323) is configured to receive N pieces of initial data transmitted by the first cache module (322), output M pieces of data to the second cache module (324) on the basis of the N pieces of initial data, obtain T pieces of interpolation data on the basis of some of the N pieces of initial data, and output the T pieces of interpolation data to the third cache module (325). The output module is configured to output the M pieces of data of the second cache module (324) to the M data signal lines. The operation conversion module (323) is further configured to receive S pieces of initial data transmitted by the first cache module (322), and output (M-T) pieces of data to the second cache module (324) on the basis of the S pieces of initial data. The output module is further configured to output the (M-T) pieces of data of the second cache module (324) and the T pieces of interpolation data of the third cache module (325) to the M data signal lines.

## Description

### TECHNICAL FIELD

Embodiments of the present disclosure relate to a display apparatus, a control method for a display apparatus, an electronic device, and a computer-readable storage medium.

### BACKGROUND

With the development of the display industry and the raising of the material standard of living, display systems with display panels as display ports have been increasingly applied to the people's daily lives, and have the advantages of small size, low power consumption, no radiation, low manufacturing cost, etc.

### SUMMARY

Embodiments of the present disclosure provide a display apparatus. The display apparatus includes a display substrate and a source driver. The display substrate includes a plurality of rows and columns of sub-pixels arranged in an array, a plurality of gate scanning signal lines, and M data signal lines, wherein the plurality of rows and columns of sub-pixels include an ith row of sub-pixels; a plurality of pieces of initial data corresponding to the ith row of sub-pixels are divided into a first set of initial data and a second set of initial data; the first set of initial data includes N pieces of initial data, and the second set of initial data includes S pieces of initial data. The source driver includes a first cache module, a second cache module, a third cache module, an operation conversion module and an output module. The first cache module includes M first cache units configured to cache the N pieces of initial data or the S pieces of initial data, wherein each piece of initial data corresponding to one data signal line. The second cache module includes at least M second cache units. The third cache module includes a plurality of third cache units. The operation conversion module configured to receive the N pieces of initial data, output M pieces of data to the second cache module based on the N pieces of initial data according to a control signal, obtain T pieces of interpolation data based on part of the N pieces of initial data and output the T pieces of interpolation data to the third cache module. The output module is configured to output the M pieces of data of the second cache module to the M data signal lines, respectively. The operation conversion module is further configured to receive the S pieces of initial data and output (M-T) pieces of data to the second cache module based on the S pieces of initial data according to a control signal. The output module is further configured to output the (M-T) pieces of data of the second cache module and the T pieces of interpolation data of the third cache module to the M data signal lines, respectively, wherein M is a positive integer greater than 2; N and S are both positive integers less than M; and T is a positive integer less than N.

For example, in the display apparatus provided by at least one example according to embodiments of the present disclosure, the N pieces of initial data are stored at intervals in the M first cache units. The operation conversion module is further configured to: send the N pieces of initial data to corresponding N second cache units according to the control signal; calculate (M-N) pieces of first interpolation data based on Q pieces of initial data of the N pieces of initial data, and send the (M-N) pieces of first interpolation data to (M-N) second cache units other than the N second cache units; and calculate T pieces of second interpolation data based on P pieces of initial data of the N pieces of initial data, and output the T pieces of second interpolation data to T third cache units.

For example, in the display apparatus provided by at least one example according to embodiments of the present disclosure, the S pieces of initial data are stored at intervals in the M first cache units. The operation conversion module is further configured to: send the S pieces of initial data to corresponding S second cache units according to the control signal; and calculate (M-T-S) pieces of third interpolation data based on the S pieces of initial data, and send the (M-T-S) pieces of third interpolation data to (M-T-S) second cache units, respectively; and the output module is further configured to output the T pieces of interpolation data of the third cache module and the S pieces of initial data and the (M-T-S) pieces of third interpolation data in the second cache module to the M data signal lines, respectively.

For example, in the display apparatus provided by at least one example according to embodiments of the present disclosure, each row of the plurality of rows and columns of sub-pixels includes sub-pixels of a plurality of colors that are arranged cyclically; every two gate scanning signal lines of the plurality of gate scanning signal lines are connected to one row of sub-pixels, and each of the M data signal lines is connected to two columns of sub-pixels; and two sub-pixels connected to the same data signal line and respectively connected to two adjacent gate scanning signal lines are sub-pixels of different colors.

For example, in the display apparatus provided by at least one example according to embodiments of the present disclosure, the sub-pixels of the plurality of colors include a first kind of sub-pixel, a second kind of sub-pixel, and a third kind of sub-pixel; the first set of initial data includes initial data corresponding to the first kind of sub-pixel and initial data corresponding to the second kind of sub-pixel; and the second set of initial data includes initial data corresponding to the third kind of sub-pixel.

For example, in the display apparatus provided by at least one example according to embodiments of the present disclosure, the operation conversion module includes M first switches, K second switches, and K operation units. inputs of the M first switches are connected with outputs of the M first cache units, respectively; an output of each first switch is connected to at least one second cache unit and at least one operation unit; each first switch is configured to turn off the output of the connected first cache units, or output data of the first cache unit to the connected second cache unit, or output the data of the first cache unit to the connected operation unit, according to a control signal; an input of each operation unit is connected to the outputs of at least two first switches, and outputs of the K operation units are connected with inputs of the K second switches, respectively; each of a first part of the second switches is connected to two second cache units; each of a second part of the second switches is connected to two second cache units and one third cache unit; each of a third part of the second switches is connected to one third cache unit; and each second switch is configured to turn off an output of the connected operation unit, or output data of the operation unit to one of the two connected second cache units, or output the data of the operation unit to the connected third cache unit, according to a control signal; and wherein K is a positive integer less than M.

For example, in the display apparatus provided by at least one example according to embodiments of the present disclosure, every two pieces of initial data of the N pieces of initial data are stored as a sub-set in two adjacent first cache units, and every two sub-sets are spaced apart by one first cache unit; every two adjacent pieces of initial data of the S pieces of initial data are spaced apart by two first cache units; a jth operation unit of the K operation units is connected with a jth first switch and a (j+3)th first switch; a jth second switch connected with the jth operation unit is connected with a (j+1)th second cache unit, a (j+2)th second cache unit, and one third cache unit; and wherein j is a positive integer less than or equal to K.

For example, in the display apparatus provided by at least one example according to embodiments of the present disclosure, the source driver further includes a controller. The controller is configured to: in a process of processing the first set of initial data, control the operation conversion module to output the two pieces of initial data in each sub-set to corresponding two second cache units; control the operation conversion module to calculate one piece of first interpolation data based on a first piece of data in every two adjacent sub-sets to obtain the (M-N) pieces of first interpolation data, and output the (M-N) pieces of first interpolation data to the (M-N) second cache units; control the operation conversion module to calculate one piece of second interpolation data based on a second piece of data in every two adjacent sub-sets to obtain the T pieces of second interpolation data, and output the T pieces of second interpolation data to the T third cache units; and control the output module to output the M pieces of data of the second cache module.

For example, in the display apparatus provided by at least one example according to embodiments of the present disclosure, the controller is further configured to: in a process of processing the second set of initial data, control the operation conversion module to output the S pieces of initial data in the first cache module to corresponding S second cache units, respectively; control the operation conversion module to calculate one piece of third interpolation data based on every two adjacent pieces of initial data in the first cache module, and output each piece of third interpolation data to one second cache unit; and control the output module to output the (M-T) pieces of data of the second cache units and the T pieces of second interpolation data of the third cache units to the M data signal lines, respectively.

For example, in the display apparatus provided by at least one example according to embodiments of the present disclosure, the plurality of rows and columns of sub-pixels further include an (i+r)th row of sub-pixels; a first sub-pixel and a second sub-pixel of the ith row of sub-pixels are connected with a first data signal line; and a first sub-pixel and a second sub-pixel of the (i+r)th row of sub-pixels are connected with a second data signal line. The source driver is configured to: in a process of processing the initial data corresponding to the ith row of sub-pixels, cache the N pieces of initial data starting from a first one of the M first cache units; and in a process of processing the initial data corresponding to the (i+r)th row of sub-pixels, cache the N pieces of initial data starting from a second one of the M first cache units; and wherein r is a positive integer.

For example, in the display apparatus provided by at least one example according to embodiments of the present disclosure, the output module includes a digital-to-analog converter and an amplifier. The digital-to-analog converter is configured to convert a signal corresponding to the M pieces of data to an analog driving signal; and the amplifier is configured to amplify the analog driving signal and then output the amplified analog driving signal to the M data signal lines.

At least one embodiment of the present disclosure provides an electronic device, including the display apparatus according to any one embodiment of the present disclosure.

At least one embodiment of the present disclosure provides a control method for a display apparatus. The display apparatus includes a display substrate and a source driver; the display substrate includes a plurality of rows and columns of sub-pixels arranged in an array, a plurality of gate scanning signal lines, and M data signal lines; the plurality of rows and columns of sub-pixels include an ith row of sub-pixels; a plurality of pieces of initial data corresponding to the ith row of sub-pixels are divided into a first set of initial data and a second set of initial data; the first set of initial data includes N pieces of initial data, and the second set of initial data includes S pieces of initial data. The control method includes: controlling the source driver to receive the N pieces of initial data, and caching the N pieces of initial data to M first cache units of the source driver, wherein each piece of initial data corresponds to one data signal line; controlling the source driver to output M pieces of data to a second cache module based on the N pieces of initial data, obtain T pieces of interpolation data based on part of the N pieces of initial data and output the T pieces of interpolation data to a third cache module of the source driver; outputting the M pieces of data cached by the second cache module to the M data signal lines; controlling the source driver to receive the S pieces of initial data and output (M-T) pieces of data to the second cache module based on the S pieces of initial data; and outputting the (M-T) pieces of data of the second cache module and the T pieces of interpolation data of the third cache module to the M data signal lines, respectively.

At least one embodiment of the present disclosure provides an electronic device, including a processor; and a memory storing one or more computer program modules. The one or more computer program modules are configured to be executed by the processor to implement the control method according to any one embodiment of the present disclosure.

At least one embodiment of the present disclosure provides a computer-readable storage medium with non-transitory computer-readable instructions stored thereon, wherein the non-transitory computer-readable instructions, when executed by a computer, cause the control method according to any one embodiment of the present disclosure.

### BRIEF DESCRIPTION OF DRAWINGS

To describe the technical solutions of the embodiments of the present disclosure more clearly, the accompanying drawings for the embodiments will be introduced below briefly. Apparently, the accompanying drawings in the following description merely involve some embodiments of the present disclosure and are not limiting of the present disclosure.
Fig. 1 illustrates a schematic diagram of a display system;
Fig. 2 illustrates a schematic diagram of a dual gate pixel architecture;
Fig. 3 illustrates a schematic diagram of another dual gate pixel architecture;
Fig. 4 illustrates a schematic diagram of yet another dual gate pixel architecture;
Fig. 5 illustrates a schematic diagram of pixel data;
Fig. 6 illustrates a schematic diagram of a source driver;
Fig. 7A illustrates a schematic diagram of transfer of data corresponding to a first row of sub-pixels of the pixel architecture shown in Fig. 2 in a source driver;
Fig. 7B illustrates a schematic diagram of transfer of data corresponding to a second row of sub-pixels of the pixel architecture shown in Fig. 2 in a source driver;
Fig. 7C illustrates a schematic diagram of transfer of data corresponding to a third row of sub-pixels of the pixel architecture shown in Fig. 2 in a source driver;
Fig. 7D illustrates a schematic diagram of transfer of data corresponding to a fourth row of sub-pixels of the pixel architecture shown in Fig. 2 in a source driver;
Fig. 8 illustrates a schematic diagram of transfer of data corresponding to a first row of sub-pixels of the pixel architecture shown in Fig. 3 in a source driver;
Fig. 9A illustrates a schematic diagram of transfer of data corresponding to a first row of sub-pixels of the pixel architecture shown in Fig. 4 in a source driver;
Fig. 9B illustrates a schematic diagram of transfer of data corresponding to a second row of sub-pixels of the pixel architecture shown in Fig. 4 in a source driver;
Fig. 10 illustrates a schematic diagram of a display apparatus provided by at least one embodiment of the present disclosure;
Fig. 11A illustrates a schematic diagram of transfer of a first row of data corresponding to the pixel architecture shown in Fig. 2 in a source driver provided by at least one embodiment of the present disclosure;
Fig. 11B illustrates a schematic diagram of transfer of a second row of data corresponding to the pixel architecture shown in Fig. 2 in a source driver provided by at least one embodiment of the present disclosure;
Fig. 11C illustrates a schematic diagram of transfer of a third row of data corresponding to the pixel architecture shown in Fig. 2 in a source driver provided by at least one embodiment of the present disclosure;
Fig. 11D illustrates a schematic diagram of transfer of a fourth row of data corresponding to the pixel architecture shown in Fig. 2 in a source driver provided by at least one embodiment of the present disclosure;
Fig. 12 illustrates a schematic diagram of an operation conversion module provided by at least one embodiment of the present disclosure;
Fig. 13 illustrates a schematic diagram of transfer of a first row of data corresponding to the pixel architecture shown in Fig. 3 in a source driver provided by at least one embodiment of the present disclosure;
Fig. 14 illustrates a schematic diagram of processing the first row of data corresponding to the pixel architecture shown in Fig. 3 by an operation conversion module provided by at least one embodiment of the present disclosure;
Fig. 15A illustrates a schematic diagram of transfer of a first row of data corresponding to the pixel architecture shown in Fig. 4 in a source driver provided by at least one embodiment of the present disclosure;
Fig. 15B illustrates a schematic diagram of transfer of a second row of data corresponding to the pixel architecture shown in Fig. 4 in a source driver provided by at least one embodiment of the present disclosure;
Fig. 16 illustrates a schematic diagram of processing a first row of data and a second row of data corresponding to the pixel architecture shown in Fig. 4 by an operation conversion module provided by at least one embodiment of the present disclosure;
Fig. 17 illustrates a flowchart of a control method for a display apparatus provided by at least one embodiment of the present disclosure;
Fig. 18 illustrates a schematic block diagram of an electronic device provided by at least one embodiment of the present disclosure;
Fig. 19 illustrates a schematic block diagram of another electronic device provided by at least one embodiment of the present disclosure; and
Fig. 20 illustrates a schematic diagram of a computer-readable storage medium provided by at least one embodiment of the present disclosure.

### DETAILED DESCRIPTION

In order to clarify the purpose, technical solution, and advantages of the embodiments of the present disclosure, the following will provide a clear and complete description of the technical solution of the embodiments of the present disclosure in conjunction with the accompanying drawings. Obviously, the described embodiments are a part of the embodiments of the present disclosure, not the entire embodiments. Based on the described embodiments disclosed herein, all other embodiments obtained by ordinary skilled persons in the art without creative labor are within the scope of protection of the present disclosure.

Unless otherwise defined, the technical or scientific terms used in this disclosure shall have the usual meanings as understood by persons with general skills in the field to which the present disclosure belongs. The terms "first", "second", and similar words used in the present disclosure do not indicate any order, quantity, or importance, but are only used to distinguish different components. Similarly, words like "a", "an", or "this" do not indicate a quantity limit, but rather indicate the existence of at least one. Words such as "including" or "containing" refer to the elements or objects that appear before the word, including those listed after the word and their equivalents, without excluding other elements or objects. Words like "connection" or "connected to" are not limited to physical or mechanical connections, but can include electrical connections, whether direct or indirect. "Up", "down", "left", "right", etc. are only used to represent relative positional relationships. When the absolute position of the described object changes, the relative positional relationship may also change accordingly.

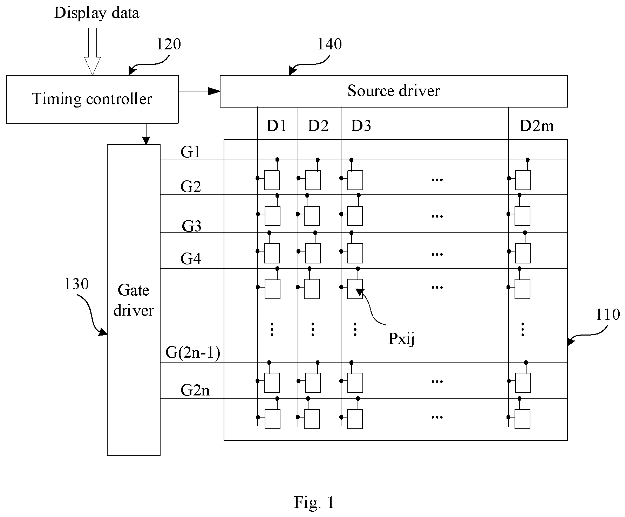

Fig. 1 illustrates a schematic diagram of a display system.

As shown in Fig. 1, the display system usually includes a display panel 110, a timing controller 120, a gate driver 130, and a source driver 140.

The display panel 110 usually includes gate scanning signal lines (G1-G2n), data signal lines (D1-D2m), and pixels. The gate scanning signal line is configured to transmit a driving signal (i.e., a row signal) for turning on a pixel switching device. The data signal line is configured to send a data signal (i.e., a column signal) for adjusting a pixel display gray level. The pixel is a minimum complete display unit of the display panel. Each pixel is generally composed of a plurality of sub-pixels Pxij. The sub-pixels Pxij are usually arranged along a direction of the gate scanning signal line. The display panel 110 has a physical resolution of 2m*2n, which refers to each row having 2m pixels, called a horizontal resolution, and each column having 2n pixels, called a vertical resolution, wherein each pixel includes a plurality of sub-pixels, e.g., a red sub-pixel, a green sub-pixel, and a blue sub-pixel.

The timing controller 120 refers to a board for realizing a timing translation function and is configured to send a clock signal to the gate driver 130 and send received display signal data to a source driver chip. The received pixel data is in one-to-one correspondence (also referred to as Point to Point (P to P)) with the sent pixel data.

The gate driver 130 is configured to generate a gate driving signal according to the clock signal and send the gate driving signal to a plurality of rows of sub-pixels through the gate scanning signal lines in a time-sharing manner. For example, the gate driving signal may be sent to the plurality of rows of sub-pixels row by row such that the plurality of rows of sub-pixels are turned on row by row.

The source driver 140 is responsible for converting a received digital data signal to an analog data signal capable of driving a plurality of columns of sub-pixels to display, and output channels thereof are in one-to-one correspondence with the data signal lines of the display panel.

In order to reduce the cost and the number of source drivers used, the display panel may be designed with a dual gate pixel architecture which is mainly characterized by that the number of the data signal lines is reduced by half if the number of the gate scanning signal lines is doubled. That is, a row of pixels needs to be driven by upper and lower two gate scanning signal lines at different times, and the data signal line needs to send a data signal twice.

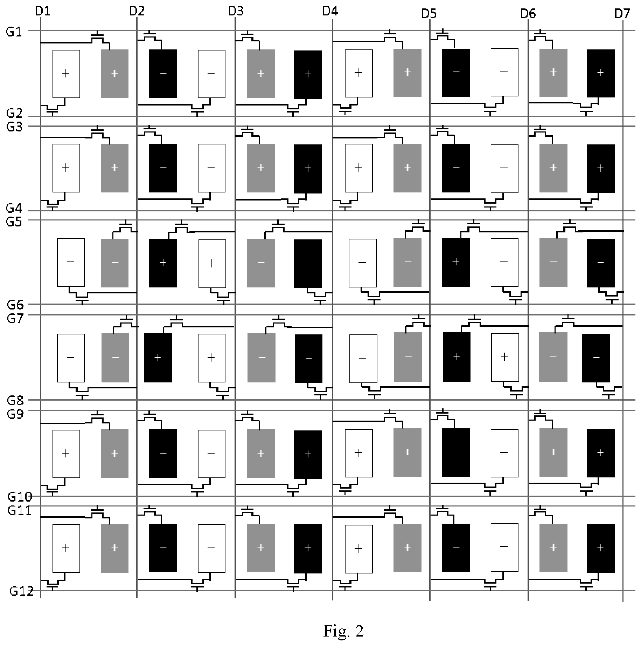

Fig. 2 illustrates a schematic diagram of a dual gate pixel architecture.

As shown in Fig. 2, each row of sub-pixels is connected with upper and lower two gate scanning signal lines, and each data signal line is connected with two columns of sub-pixels. The sub-pixel may be in short connection or long connection with the data signal line (the connection of the sub-pixel with an adjacent data signal line is the short connection, and the connection of the sub-pixel with a non-adjacent data signal line is the long connection). Two sub-pixels located between two adjacent data signal lines and between two adjacent gate scanning signal lines are connected to the same data signal line. For example, two sub-pixels located between the data signal lines D1 and D2 and between the gate scanning signal lines G1 and G2 are connected to the data signal line D1. Two sub-pixels located between two adjacent data signal lines and between two adjacent gate scanning signal lines are connected to different gate scanning signal lines. The connection law of the data signal line and the sub-pixels in a horizontal direction is as follows: long in upper and short in lower, short in upper and long in lower, and short in upper and long in lower, circulated in this order; or the connection law is short in upper and long in lower, long in upper and short in lower, and long in upper and short in lower, circulated in this order. The connection manner of the data signal line and the sub-pixels in a vertical direction follows a cycle of changing once every two rows. For example, the first and second rows of sub-pixels and the third and fourth rows of sub-pixels are located on two sides of the same data signal line, respectively. For example, the first and second rows of sub-pixels are connected starting from the first data signal line D1, and the third and fourth rows of sub-pixels are connected starting from the second data signal line D2.

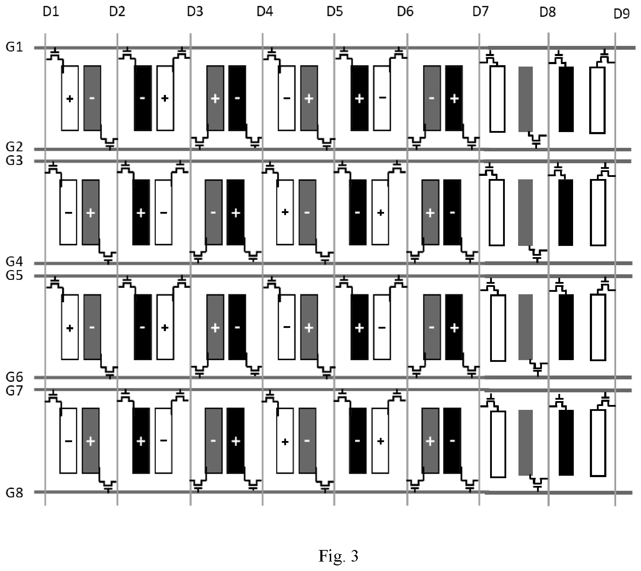

Fig. 3 illustrates a schematic diagram of another dual gate pixel architecture.

As shown in Fig. 3, each row of sub-pixels is connected with upper and lower two gate scanning signal lines, and each data signal line is connected with two columns of sub-pixels. The connection of the sub-pixel with the data signal line is short connection. Two sub-pixel units between two adjacent data signal lines and two adjacent gate scanning signal lines are connected to the two data signal lines, respectively, but may be connected to one gate scanning signal line, or may be connected to different gate scanning signal lines. The law in the horizontal direction is upper-lower, upper-upper, and lower-lower, and the law in the vertical direction is the same.

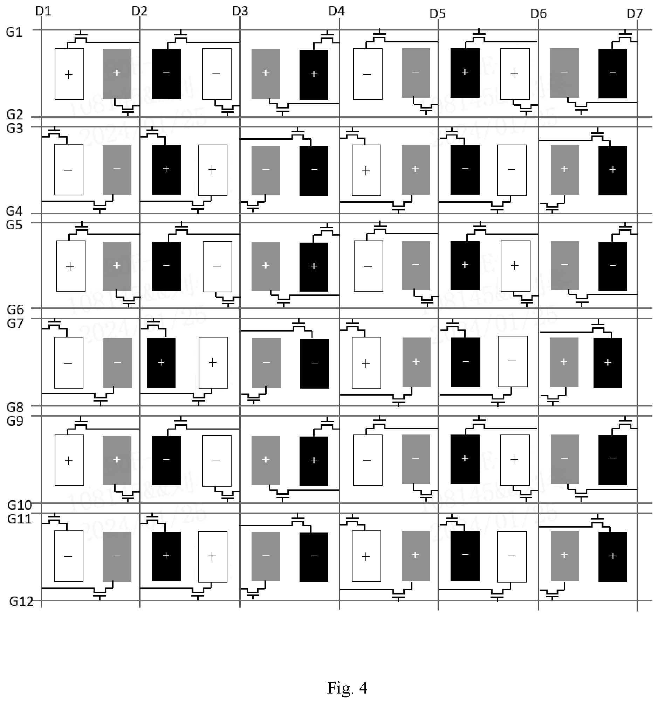

Fig. 4 illustrates a schematic diagram of yet another dual gate pixel architecture.

As shown in Fig. 4, the features of the pixel architecture are similar to those of the pixel architecture shown in Fig. 2 except that the connection law of the data signal line and the sub-pixels in the horizontal direction is long in upper and short in lower, long in upper and short in lower, and short in upper and long in lower, circulated in this order; or the connection law is short in upper and long in lower, short in upper and long in lower, and long in upper and short in lower, circulated in this order. The data signal lines and the sub-pixels in the vertical direction change once every one row. For example, the first and second rows of sub-pixels connected to the same data line are located on two sides of the data signal line, respectively. For example, the first row of sub-pixels is connected starting from the second data signal line D2, and the second row of sub-pixels is connected starting from the first data signal line D1.

In Fig. 2 to Fig. 4, boxes of different gray scales represent sub-pixels of different colors. For example, a white box represents the red sub-pixel; a gray box represents the green sub-pixel; and a black box represents the blue sub-pixel.

In the above three architectures, for the same column of data signal lines, the sub-pixels connected to two adjacent rows of gate scanning signal lines are not sub-pixels of the same color.

Another feature of the three architectures is as follows: according to a scanning direction from top to bottom for the gate driving signal and a scanning direction from left to right for the data driving signal, i.e., with the shown top left corner as a starting point, three laterally adjacent sub-pixels of each color are used as a group, wherein three sub-pixels in one group are all mounted to an upper gate scanning signal line, three sub-pixels in one group are all mounted to a lower gate scanning signal line, and the first sub-pixel and the third sub-pixel in another group are both mounted to an upper gate scanning signal line and the second sub-pixel is mounted to a lower gate scanning signal line, i.e., forming upper-upper-upper, lower-lower-lower, and upper-lower-upper structures. Taking the structure shown in Fig. 2 as an example, for the first row, starting from the far left, three adjacent red sub-pixels (represented by white boxes) are all connected to the lower gate scanning signal line (i.e., G2); three adjacent green sub-pixels (represented by gray boxes) are all connected to the upper gate scanning signal line (i.e., G1); and the first and third blue sub-pixels of three adjacent blue sub-pixels (represented by black boxes) are connected to the upper gate scanning signal line (i.e., G1), while the second blue sub-pixel is connected to the lower gate scanning signal line (i.e., G2).

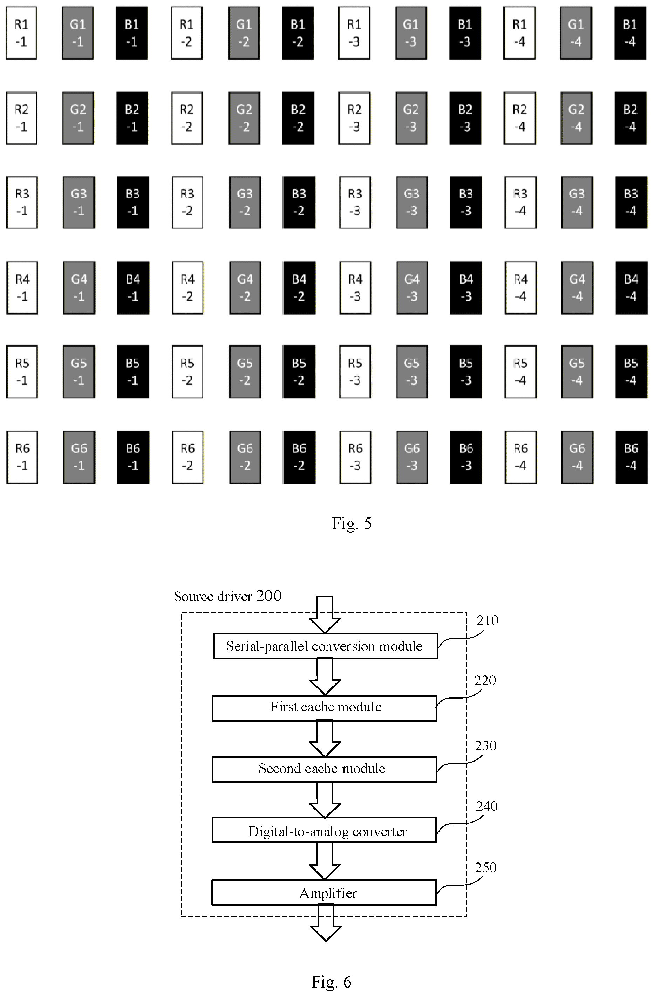

Fig. 5 illustrates a schematic diagram of pixel data.

As shown in Fig. 2 and Fig. 5, for the Dual gate architecture shown in Fig. 2:
R1-1 corresponds to sub-pixel G2D1 (the sub-pixel G2D1 represents a sub-pixel connected with the gate scanning signal line G2 and the data signal line D1, similarly hereinafter). That is, R1-1 is the data of the sub-pixel G2D1. G1-1 corresponds to sub-pixel G1D1, B1-1 corresponds to sub-pixel G1D2, R1-2 corresponds to sub-pixel G2D2, G1-2 corresponds to sub-pixel G1D3, and B1-2 corresponds to sub-pixel G2D3;
R2-1 corresponds to sub-pixel G4D1, G2-1 corresponds to sub-pixel G3D1, B2-1 corresponds to sub-pixel G3D2, R2-2 corresponds to sub-pixel G4D2, G2-2 corresponds to sub-pixel G3D3, and B2-2 corresponds to sub-pixel G4D3;
R3-1 corresponds to sub-pixel G6D2, G3-1 corresponds to sub-pixel G5D2, B3-1 corresponds to sub-pixel G5D3, R3-2 corresponds to sub-pixel G6D3, G3-2 corresponds to sub-pixel G5D4, and B3-2 corresponds to sub-pixel G6D4;
R4-1 corresponds to sub-pixel G8D2, G4-1 corresponds to sub-pixel G7D2, B4-1 corresponds to sub-pixel G7D3, R4-2 corresponds to sub-pixel G8D3, G4-2 corresponds to sub-pixel G7D4, and B4-2 corresponds to sub-pixel G8D4; and
4 rows form a cycle, and the rest may be deduced by analogy.

As shown in Fig. 3 and Fig. 5, for the dual gate architecture shown in Fig. 3:
R1-1 corresponds to sub-pixel G1D1, G1-1 corresponds to sub-pixel G2D2, B1-1 corresponds to sub-pixel G1D2, R1-2 corresponds to sub-pixel G1D3, G1-2 corresponds to sub-pixel G2D3, and B1-2 corresponds to sub-pixel G2D4;
R2-1 corresponds to sub-pixel G3D1, G2-1 corresponds to sub-pixel G4D2, B2-1 corresponds to sub-pixel G3D2, R2-2 corresponds to sub-pixel G3D3, G2-2 corresponds to sub-pixel G4D3, and B2-2 corresponds to sub-pixel G4D4; and the rest may be deduced by analogy.

As shown in Fig. 4 and Fig. 5, for the dual gate architecture shown in Fig. 4:
R1-1 corresponds to sub-pixel G1D2, G1-1 corresponds to sub-pixel G2D2, B1-1 corresponds to sub-pixel G1D3, R1-2 corresponds to sub-pixel G2D3, G1-2 corresponds to sub-pixel G2D4, and B1-2 corresponds to sub-pixel G1D4;
R2-1 corresponds to sub-pixel G3D1, G2-1 corresponds to sub-pixel G4D1, B2-1 corresponds to sub-pixel G3D2, R2-2 corresponds to sub-pixel G4D2, G2-2 corresponds to sub-pixel G4D3, and B2-2 corresponds to sub-pixel G3D3; and
two rows form a cycle, and the rest may be deduced by analogy.

Fig. 6 illustrates a schematic diagram of a source driver.

As shown in Fig. 6, the source driver 200 includes a serial-parallel conversion module 210, a first cache module 220, a second cache module 230, a digital-to-analog converter 240, and an amplifier 250.

The serial-parallel conversion module 210 receives a serial digital data driving signal sent by a front end, i.e., sequentially receives a digital data driving signal of each sub-pixel, converts the serial digital data driving signal to a parallel digital data driving signal, and stores the parallel digital data driving signal to the first cache module 220. The first cache module 220 then sends the digital data driving signal to the second cache module 230. The second cache module 230 is connected with the digital-to-analog converter 240. The digital data driving signal is converted by the digital-to-analog converter 240 to an analog data driving signal that is sent to the display panel via the amplifier 250. After the digital data driving signal is sent to the second cache module 230, the serial-parallel conversion module 210 starts to receive data of next row. That is, the second cache module 230 stores the data of the current display row, and the first cache module 220 stores data to be displayed in next row. Therefore, two caches are needed.

In the dual gate pixel architecture, each row of sub-pixels is driven by two gate driving signals at different times, and data signals corresponding to each row of sub-pixels are sent for two times. For example, a first row of sub-pixels is connected to a first gate scanning signal line and a second gate scanning signal line. During the outputting of a gate driving signal by the first gate scanning signal line, a plurality of sub-pixels in the first row that are connected with the first gate scanning signal line are turned on, during which display data may be output to these sub-pixels through a plurality of data signal lines. During the outputting of a gate driving signal by the second gate scanning signal line, a plurality of sub-pixels in the first row that are connected with the second gate scanning signal line are turned on, during which display data may be output to these sub-pixels through a plurality of data signal lines.

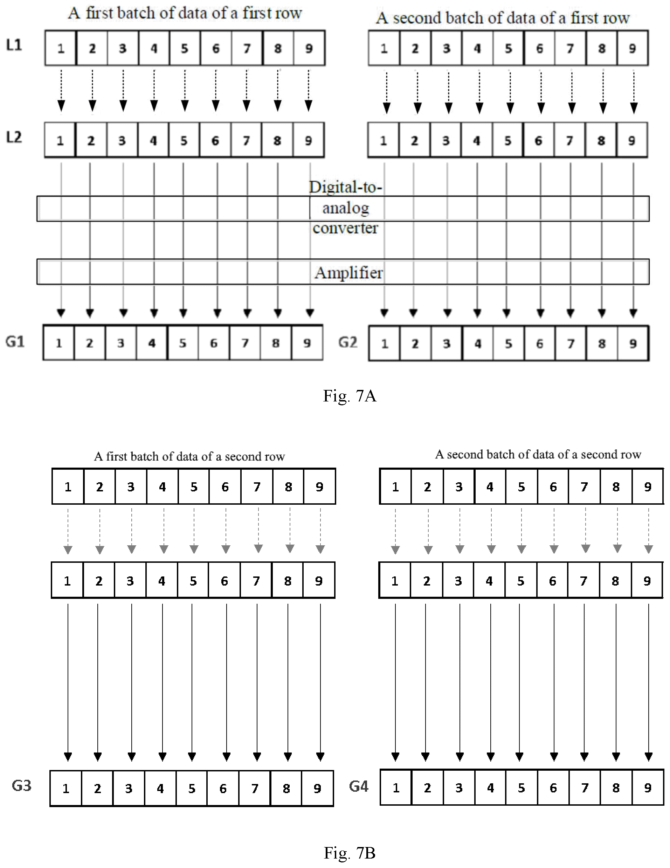

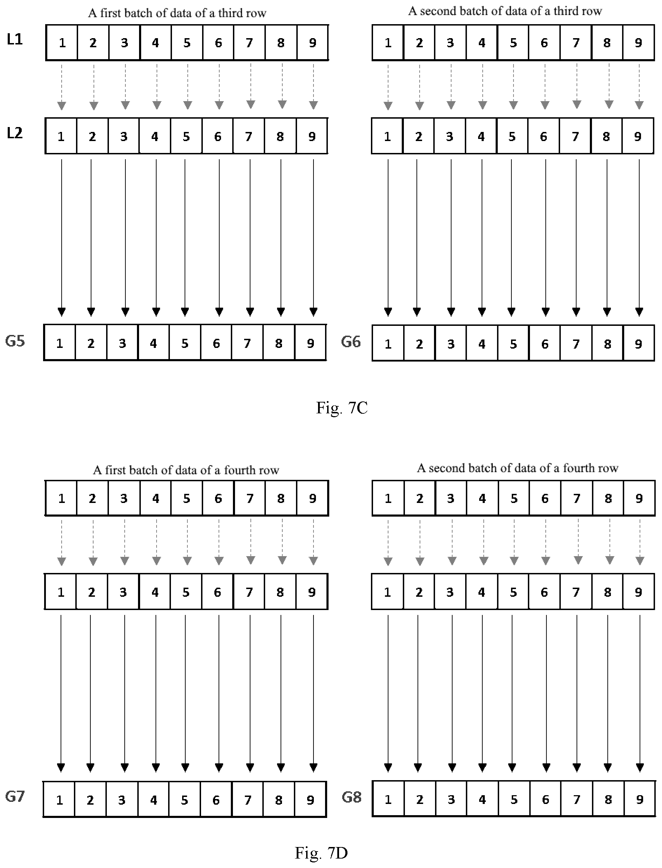

Fig. 7A illustrates a schematic diagram of transfer of data corresponding to a first row of sub-pixels of the pixel architecture shown in Fig. 2 in a source driver. Fig. 7B illustrates a schematic diagram of transfer of data corresponding to a second row of sub-pixels of the pixel architecture shown in Fig. 2 in a source driver. Fig. 7C illustrates a schematic diagram of transfer of data corresponding to a third row of sub-pixels of the pixel architecture shown in Fig. 2 in a source driver. Fig. 7D illustrates a schematic diagram of transfer of data corresponding to a fourth row of sub-pixels of the pixel architecture shown in Fig. 2 in a source driver.

As shown in Figs. 7A-7D, L1 and L2 represent a first cache module and a second cache module, respectively; and G1-G8 represent a first to an eighth rows of gate scanning signal lines, respectively;
channels 1-9 in L1/L2/G1 corresponds to sub-pixels G1D1-G1D9 in Fig. 2, namely G1-1, B1-1, G1-2, G1-3, B1-3, G1-4, G1-5, B1-5, and G1-6, respectively;
channels 1-9 in L1/L2/G2 corresponds to sub-pixels G2D1-G2D9 in Fig. 2, namely R1-1, R1-2, B1-2, R1-3, R1-4, B1-4, R1-5, R1-6, and B1-6, respectively;
channels 1-9 in L1/L2/G3 corresponds to sub-pixels G3D1-G3D9 in Fig. 2, namely G2-1, B2-1, G2-2, G2-3, B2-3, G2-4, G2-5, B2-5, and G2-6, respectively;
channels 1-9 in L1/L2/G4 corresponds to sub-pixels G4D1-G4D9 in Fig. 2, namely R2-1, R2-2, B2-2, R2-3, R2-4, B2-4, R2-5, R2-6, and B2-6, respectively;
channels 1-9 in L1/L2/G5 corresponds to sub-pixels G5D1-G5D9 in Fig. 2, respectively, wherein G5D2-G5D9 correspond to G3-1, B3-1, G3-2, G3-3, B3-3, G3-4, G3-5, and B3-5, but there is no pixel unit corresponding to G5D1, i.e., the data sent from the front end is invalid;
channels 1-9 in L1/L2/G6 corresponds to sub-pixels G6D1-G6D9 in Fig. 2, respectively, wherein G6D2-G6D9 correspond to R3-1, R3-2, B3-2, R3-3, R3-4, B3-4, R3-5, and R3-6, but there is no pixel unit corresponding to G6D1, i.e., the data sent from the front end is invalid;
channels 1-9 in L1/L2/G7 corresponds to sub-pixels G7D1-G7D9 in Fig. 2, respectively, wherein G7D2-G7D9 correspond to G4-1, B4-1, G4-2, G4-3, B4-3, G4-4, G4-5, and B4-5, but there is no pixel unit corresponding to G7D1, i.e., the data sent from the front end is invalid; and
channels 1-9 in L1/L2/G8 corresponds to sub-pixels G8D1-G8D9 in Fig. 2, respectively, wherein G8D2-G8D9 correspond to R4-1, R4-2, B4-2, R4-3, R4-4, B4-4, R4-5, and R4-6, but there is no pixel unit corresponding to G8D1, i.e., the data sent from the front end is invalid.

It needs to be noted that the data volume sent by each row is usually the same, and therefore a piece of virtual data may be compensated for the sub-pixel G5D1/G6D1/G7D1/G8D1.

The rest may be deduced by analogy.

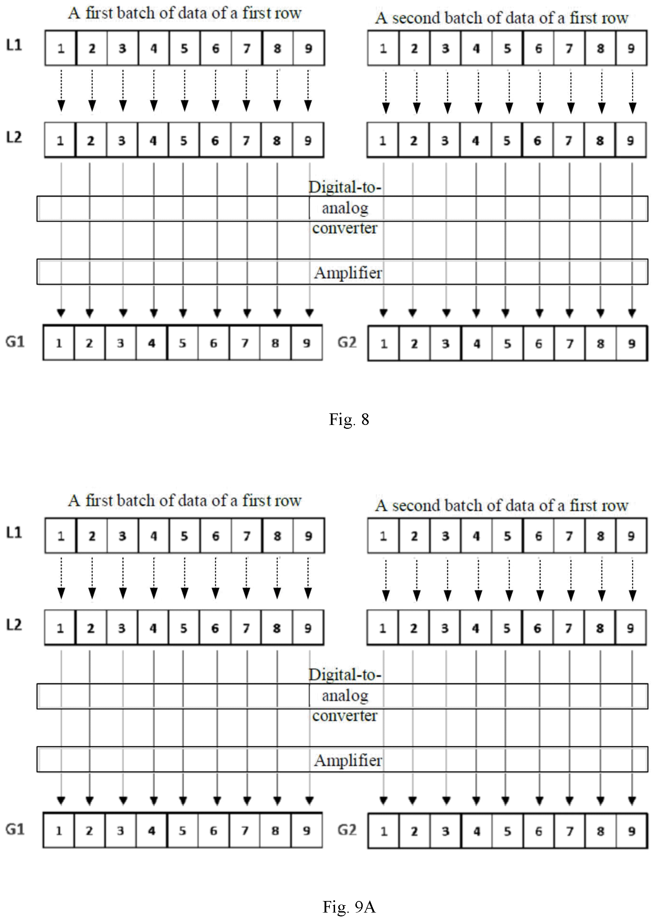

Fig. 8 illustrates a schematic diagram of transfer of data corresponding to a first row of sub-pixels of the pixel architecture shown in Fig. 3 in a source driver.

As shown in Fig. 8, channels 1-9 in L1/L2/G1 correspond to sub-pixels G1D1-G1D9 in Fig. 3, namely R1-1, B1-1, R1-2, R1-3, B1-3, R1-4, R1-5, B1-5, and R1-6, respectively; and
channels 1-9 in L1/L2/G2 correspond to sub-pixels G2D1-G2D9 in Fig. 3, namely G1-1, G1-2, B1-2, G1-3, G1-4, B1-4, G1-5, G1-6, and B1-6, respectively.

The rest may be deduced by analogy.

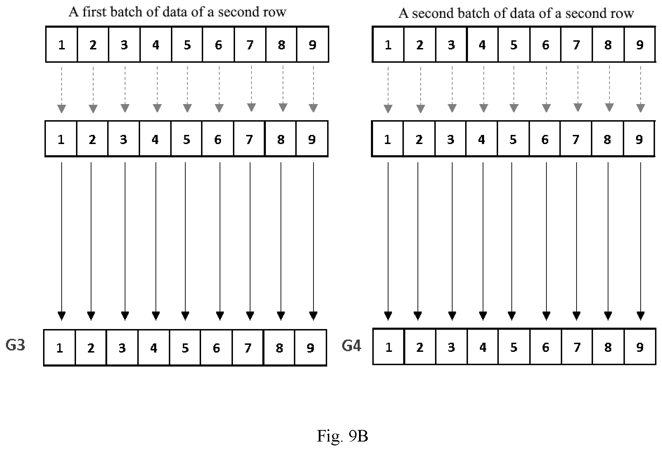

Fig. 9A illustrates a schematic diagram of transfer of data corresponding to a first row of sub-pixels of the pixel architecture shown in Fig. 4 in a source driver. Fig. 9B illustrates a schematic diagram of transfer of data corresponding to a second row of sub-pixels of the pixel architecture shown in Fig. 4 in a source driver.

As shown in Fig. 9A and Fig. 9B, channels 1-9 in L1/L2/G1 correspond to sub-pixels G1D1-G1D9 in Fig. 4, namely -, R1-1, B1-1, B1-2, R1-3, B1-3, B1-4, R1-5, and B1-5, respectively;
channels 1-9 in L1/L2/G2 correspond to sub-pixels G2D1-G2D9 in Fig. 4, namely -, G1-1, R1-2, G1-2, G1-3, R1-4, G1-4, G1-5, and R1-6, respectively;
channels 1-9 in L1/L2/G3 correspond to sub-pixels G3D1-G3D9 in Fig. 4, namely R2-1, B2-1, B2-2, R2-3, B2-3, B2-4, R2-5, B2-5, and B2-6, respectively; and
channels 1-9 in L1/L2/G4 correspond to sub-pixels G4D1-G4D9 in Fig. 4, namely G2-1, R2-2, G2-2, G2-3, R2-4, G2-4, G2-5, R2-6, and G2-6, respectively.

The rest may be deduced by analogy.

The resolution of a display signal needs to match the physical resolution of the display panel, i.e., data is in one-to-one correspondence with physical sub-pixels. When the resolution of the display signal does not match the physical resolution of the display panel, e.g., the horizontal resolution of the display signal is only a half of the resolution of the display panel, the display panel cannot realize display. When the resolution of the display signal is less than the physical resolution of the display panel, the display signal may be expanded, e.g., expanded in the horizontal direction, such that the horizontal resolution of the expanded display signal is consistent with that of the display panel.

The dual gate pixel architecture is not applicable to the hardware super resolution (HSR) technology. the existing horizontal resolution expansion solution cannot realize the expansion of the horizontal resolution for the dual gate pixel architecture. Therefore, how to realize the horizontal resolution expansion function of the dual gate pixel architecture is a problem needing to be solved.

At least one embodiment of the present disclosure provides a display apparatus, a control method, an electronic device, and a computer-readable storage medium. The display substrate includes a plurality of rows and columns of sub-pixels arranged in an array, a plurality of gate scanning signal lines, and M data signal lines, wherein the plurality of rows and columns of sub-pixels include an ith row of sub-pixels; a plurality of pieces of initial data corresponding to the ith row of sub-pixels are divided into a first set of initial data and a second set of initial data; the first set of initial data includes N pieces of initial data, and the second set of initial data includes S pieces of initial data. The source driver includes a first cache module, a second cache module, a third cache module, an operation conversion module, and an output module. The first cache module includes M first cache units configured to cache the N pieces of initial data or the S pieces of initial data, and wherein each piece of initial data corresponds to one data signal line. The second cache module includes at least M second cache units. The third cache module includes a plurality of third cache units. The operation conversion module is configured to receive the N pieces of initial data, output M pieces of data to the second cache module based on the N pieces of initial data according to a control signal, obtain T pieces of interpolation data based on part of the N pieces of initial data and output the interpolation data to the third cache module. The output module is configured to output the M pieces of data of the second cache module to the M data signal lines, respectively. The operation conversion module is further configured to receive the S pieces of initial data and output (M-T) pieces of data to the second cache module based on the S pieces of initial data according to a control signal; and the output module is further configured to output the (M-T) pieces of data of the second cache module and the T pieces of interpolation data of the third cache module to the M data signal lines, respectively; wherein M is a positive integer greater than 2; N and S are both positive integers less than M; and T is a positive integer less than N.

According to the display apparatus, by controlling locations of data stored in various levels of caches, the operation method and the output time, the expansion of the horizontal resolution of the display panel of the Dual gate pixel architecture can be realized.

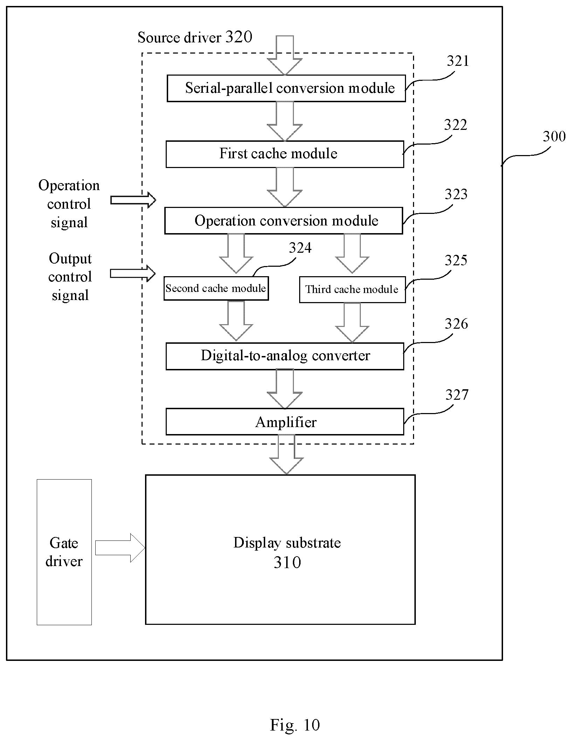

Fig. 10 illustrates a schematic diagram of a display apparatus provided by at least one embodiment of the present disclosure.

As shown in Fig. 10, the display apparatus 300 includes a display substrate 310 and a source driver 320.

The display substrate 310 includes a plurality of rows and columns of sub-pixels arranged in an array, a plurality of gate scanning signal lines, and M data signal lines, wherein the plurality of rows and columns of sub-pixels include an ith row of sub-pixels; a plurality of pieces of initial data corresponding to the ith row of sub-pixels are divided into a first set of initial data and a second set of initial data; the first set of initial data includes N pieces of initial data, and the second set of initial data includes S pieces of initial data.

The source driver 320 includes a first cache module 322, a second cache module 324, a third cache module 325, an operation conversion module 323, and an output module. The first cache module 322 includes M first cache units configured to cache N pieces of initial data or S pieces of initial data, each piece of initial data corresponding to data signal line. The second cache module 324 includes at least M second cache units, and the third cache module 325 includes a plurality of third cache unit.

The operation conversion module 323 is configured to receive N pieces of initial data, output M pieces of data to the second cache module based on the N pieces of initial data according to a control signal, obtain T pieces of interpolation data based on part of the N pieces of initial data and output the interpolation data to the third cache module. The output module is configured to output the M pieces of data of the second cache module to the M data signal lines, respectively.

The operation conversion module is further configured to receive the S pieces of initial data and output (M-T) pieces of data to the second cache module based on the S pieces of initial data according to a control signal. The output module is further configured to output the (M-T) pieces of data of the second cache module and the T pieces of interpolation data of the third cache module to the M data signal lines, respectively.

For example, M is a positive integer greater than 2; N and S are both positive integers less than M; and T is a positive integer less than N.

For example, the M first cache units in the first cache module 322 correspond to M channels of the source driver, respectively. Likewise, the M second cache units in the second cache module 324 correspond to the M channels, respectively. The third cache module 325 may include M third cache units in one-to-one correspondence with M channels. The M channels of the source driver are configured to output data signals to the M data signal lines, respectively.

For example, the display substrate 310 may be of the dual gate pixel architecture. As shown in Fig. 2 to Fig. 4, for example, each row of the plurality of rows and columns of sub-pixels includes sub-pixels of a plurality of colors that are arranged cyclically. Every two gate scanning signal lines of the plurality of gate scanning signal lines are connected to one row of sub-pixels, and each of the M data signal lines is connected to two columns of sub-pixels. Two sub-pixels connected to the same data signal line and respectively connected to two adjacent gate scanning signal lines are sub-pixels of different colors.

For example, the display apparatus 300 may further include a gate driver 330 configured to output a gate scanning signal to a plurality of gate scanning signal lines in a sequential shifting manner. Moreover, the display apparatus 300 may further include other devices such as a timing controller. The source driver 320 may further include other modules such as a serial-parallel conversion module 321.

For example, the output module includes a digital-to-analog converter 326 and an amplifier 327. The digital-to-analog converter 326 is configured to convert a signal corresponding to the M pieces of data to an analog driving signal, and the amplifier 327 is configured to amplify the analog driving signal and then output the amplified analog driving signal to the M data signal lines.

For example, when the first cache module caches the first set of initial data, the N pieces of initial data included in the first set of initial data may be stored in the M first cache units at intervals (i.e., not stored sequentially and adjacently). When the first cache module caches the second set of initial data, the S pieces of initial data included in the second set of initial data may be stored in the M first cache units at intervals. Each first cache unit may be configured to cache one piece of initial data. Each cache unit corresponds to one channel, and each channel corresponds to one data signal line. Therefore, each piece of initial data may correspond to one data signal line, and one piece of initial data may be output to one sub-pixel.

For example, unlike the source driver 200 shown in Fig. 6, the source driver 320 according to embodiments of the present disclosure has the operation conversion module 323 added after the first cache module 322, and also the third cache module 325 added. The third cache module 325 is in parallel with the second cache module 324. The third cache module 325 is configured to store a result output by the operation conversion module 323 and send data to the digital-to-analog converter 326. The operation conversion module 323 may include a plurality of operation units. Each operation unit may perform a copying operation, or may perform an averaging operation (which may also be an operator of other calculations; and the following description is made by taking the averaging operation as an example). The operation conversion module 323 may send at least part of data stored in the first cache module 322 to the second cache module 324, or may send an operation result of the operation unit to the second cache module or the third cache module. The operation conversion module may receive an operation control signal which is configured to control whether the data of the first cache module 322 is output, and output to the second cache module 324 or the operation unit. The operation conversion module may further receive an output control signal which is configured to control whether an operation result of an operation converter is output to the second cache module 324 or the third cache module 325, and the output control signal is configured to control the second cache module 324 and the third cache module 325 to be connected with or disconnected from the digital-to-analog converter 326.

For example, the initial data corresponding to each row of sub-pixels may be divided into a first set of initial data and a second set of initial data. For example, the sub-pixels of the plurality of colors in the display substrate may include a first kind of sub-pixel, a second kind of sub-pixel, and a third kind of sub-pixel. The first set of initial data includes initial data corresponding to the first kind of sub-pixel and initial data corresponding to the second kind of sub-pixel, and the second set of initial data includes initial data corresponding to the third kind of sub-pixel.

For example, there is no repeated data between the first set of initial data and the second set of initial data. For example, in some embodiments, the first kind of sub-pixel is a green sub-pixel, the second kind of sub-pixel of is a blue sub-pixel, and the third kind of sub-pixel is a red sub-pixel. In other embodiments, the first set of initial data may include red sub-pixels and green sub-pixels, and the second set of initial data may include blue sub-pixels; or the first set of initial data may include red sub-pixels and blue sub-pixels, and the second set of initial data may include green sub-pixels. Sub-pixel colors corresponding to the first set of initial data and the second set of initial data may be determined according to requirements. In other embodiments, the display substrate may further include sub-pixels of other colors, e.g., white sub-pixels.

For example, for the first set of initial data and the second set of initial data corresponding to each row of sub-pixels, the source driver may be configured to process the first set of initial data in a first time period and process the second set of initial data in a second time period, the first time period being earlier than the second time period.

For example, a first row of sub-pixels is connected with a first gate scanning signal line and a second gate scanning signal line. The first row of sub-pixels may be divided into a first part of sub-pixels connected with the first gate scanning signal line and a second part of sub-pixels connected with the second gate scanning signal line.

For example, the source driver may process the first set of initial data corresponding to the first row of sub-pixels. When the first set of initial data (N pieces of initial data) is processed, the first set of initial data may be stored in the M first cache units at intervals. The operation conversion module may transfer at least part of data in the first cache module to the corresponding second cache unit, and may perform an interpolation operation on at least part of data in the first cache module to obtain a plurality of pieces of interpolation data. The operation conversion module transmits part of the interpolation data to the second cache unit such that the second cache unit caches M pieces of data, wherein one part of the M pieces of data is the initial data transmitted from the first cache unit, and the other part of data is the processed interpolation data, and the M pieces of data in the M second cache units may be then output to a first part of sub-pixels. The expansion from N pieces of data to M pieces of data is realized. The operation conversion module may transmit the other part of interpolation data to the third cache module and retain this part of first interpolation data for outputting when processing the second set of initial data.

For example, when processing the second set of initial data (S pieces of initial data) corresponding to the first row of sub-pixels, the source driver may store the second set of initial data in the M first cache units at intervals. The operation conversion module may transfer at least part of data in the first cache module to the corresponding second cache unit, and may perform the interpolation operation on at least part of data in the first cache module to obtain a plurality of pieces of interpolation data. The operation conversion module transmits all the interpolation data to the second cache unit such that a total of M pieces of data is stored in the second cache unit and the third cache unit, and the M pieces of data correspond to M channels, respectively. The source driver may output the M pieces of data in the second cache unit and the third cache unit to a second part of pixels. The expansion from S pieces of data to M pieces of data is realized.

For example, when the first set of initial data is processed, the N pieces of initial data are stored in the M first cache units at intervals. The operation conversion module is further configured to: send the N pieces of initial data in the first cache module to corresponding N second cache units according to a control signal, respectively; calculate (M-N) pieces of first interpolation data based on Q pieces of initial data of the N pieces of initial data, and send the (M-N) pieces of first interpolation data to (M-N) second cache units other than the N second cache units; calculate T pieces of second interpolation data based on P pieces of initial data of the N pieces of initial data, and output the T pieces of second interpolation data to T third cache units.

For example, when the second set of initial data is processed, the S pieces of initial data are stored in the M first cache units at intervals. The operation conversion module is further configured to: send the S pieces of initial data to corresponding S second cache units according to a control signal; calculate (M-T-S) pieces of third interpolation data based on the S pieces of initial data, and send the (M-T-S) pieces of third interpolation data to (M-T-S) second cache units, respectively. The output module is further configured to output the T pieces of interpolation data of the third cache module and the S pieces of initial data and the (M-T-S) pieces of third interpolation data in the second cache module to the M data signal lines, respectively.

How the source driver of the embodiments of the present disclosure realizes the horizontal resolution expansion of the display signal of the dual gate pixel architecture is described below in combination with specific implementations.

For example, when the first cache module caches the N pieces of initial data, every two pieces of initial data of the N pieces of initial data are stored as a sub-set in two adjacent first cache units, and every two sub-sets are spaced apart by one first cache unit. In other embodiments, every three or more pieces of initial data may be stored as a sub-set in three or more adjacent first cache units, respectively, and each sub-set may also be spaced apart by two or more first cache units, which may be specifically set according to an actual requirement. For example, when the first cache module caches the S pieces of initial data, every two adjacent pieces of initial data of the S pieces of initial data may be spaced apart by two first cache units. In other embodiments, every two adjacent pieces of initial data may also be spaced apart by three or more first cache units, or may be stored in other spacing manners, which may be specifically set according to an actual requirement.

For example, the source driver further includes a controller configured to: in a process of processing the first set of initial data, control the operation conversion module to output the two pieces of initial data in each subset to corresponding two second cache units; control the operation conversion module to calculate one piece of first interpolation data based on a first piece of data in every two adjacent sub-sets to obtain the (M-N) pieces of first interpolation data, and output the (M-N) pieces of first interpolation data to the (M-N) second cache units; control the operation conversion module to calculate one piece of second interpolation data based on a second piece of data in every two adjacent sub-sets to obtain the T pieces of second interpolation data, and output the T pieces of second interpolation data to the T third cache units; and control the output module to output the M pieces of data of the second cache module.

For example, the controller is further configured: in a process of processing the second set of initial data, control the operation conversion module to output the S pieces of initial data in the first cache module to the corresponding S second cache units, respectively; control the operation conversion module to calculate one piece of third interpolation data based on every two adjacent pieces of initial data in the first cache module, and output each piece of third interpolation data to one second cache unit; and control the output module to output the (M-T) pieces of data of the second cache unit and the T pieces of second interpolation data of the third cache unit to the M data signal lines, respectively.

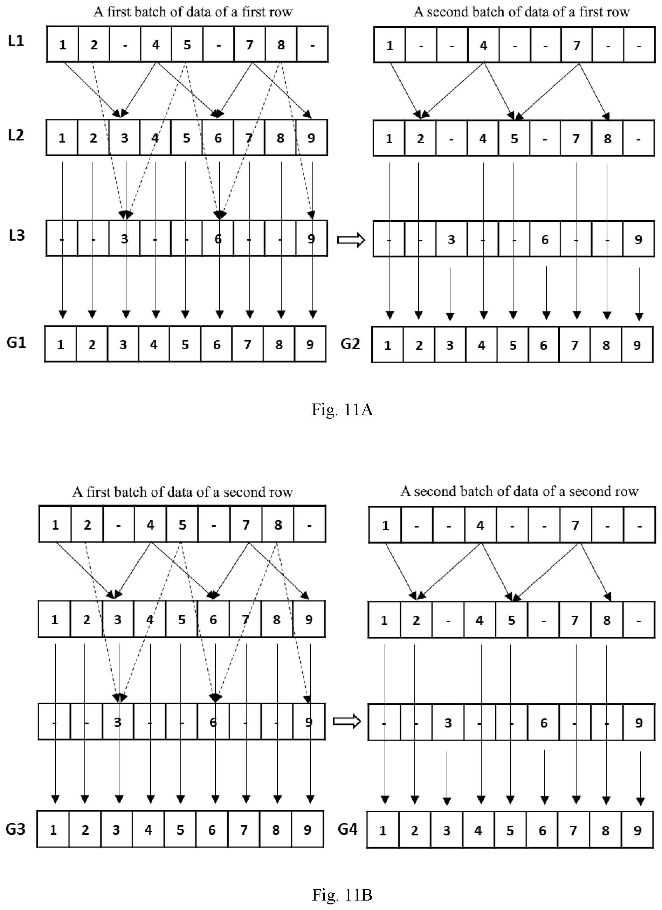

Fig. 11A illustrates a schematic diagram of transfer of a first row of data corresponding to the pixel architecture shown in Fig. 2 in a source driver provided by at least one embodiment of the present disclosure.

As shown Fig. 11A, a first batch of data of a first row may be the first set of initial data corresponding to the first row of sub-pixels, and a second batch of data of the first row may be the second set of initial data corresponding to the first row of sub-pixels.

For example, the first batch of data of the first row includes the sub-pixel data G1-1/B1-1/G1-2/B1-2/G1-3/B1-3/G1-4/B1-4, etc. in the first row shown in Fig. 5, and the data is sequentially stored in the channel 1/2/4/5/7/8/10/11 of the first cache module (L1), and so on. The data of the channels of the first cache module is stored to the corresponding channels of the second cache module L2. Moreover, the averaging operation is performed on the data of the channel 1 and the channel 4 of the first cache module to generate G1-1' which is stored to the channel 3 of the second cache module; the averaging operation is performed on the data of the channel 4 and the channel 7 of the first cache module to generate G1-2' which is stored to the channel 6 of the second cache module; the averaging operation is performed on the data of the channel 7 and the channel 10 of the first cache module to generate G1-3' which is stored to the channel 9 of the second cache module, and so on.

For example, the averaging operation is performed on the data of the channel 2 and the channel 5 of the first cache module to generate B1-1' which is stored to the channel 3 of the third cache module (L3); the averaging operation is performed on the data of the channel 5 and the channel 8 of the first cache module to generate B1-2' which is stored to the channel 6 of the third cache module; the averaging operation is performed on the data of the channel 8 and the channel 11 of the first cache module to generate B1-3' which is stored to the channel 9 of the third cache module, and so on.

For example, the data (i.e., G1-1/B1-1/G1-1'/G1-2/B1-2/G1-2'/G1-3/B1-3/G1-3', etc.) stored in each channel of the second cache module is sent to the corresponding data signal line of the display panel through the digital-to-analog converter and the amplifier. The data of the third cache module is stored continuously and temporarily not transferred down, and is transferred down when the second batch of data of the first row is processed.

The control of data transfer and the interpolation operation between the first cache module and the second cache module is performed by the operation conversion module, thereby realizing the horizontal resolution expansion of the first batch of data of the first row, and a color arrangement of a set of data obtained by expansion (i.e., the M pieces of data cached to the second cache module) is identical to that of a plurality of sub-pixels connected with the first gate scanning signal line G1, and therefore, the expanded data may be transferred to the plurality of sub-pixels connected with the first gate scanning signal line G1.

For example, the second batch of data of the first row includes the sub-pixel data R1-1/R1-2/R1-3/R1-4 in the first row shown in Fig. 5, which is sequentially stored in the channel 1/4/7/10 of the first cache module, and so on. The data of the channels of the first cache module is stored to the corresponding channels of the second cache module. Moreover, the averaging operation is performed on the data of the channel 1 and the channel 4 of the first cache module to generate R1-1' which is stored to the channel 2 of the second cache module; the averaging operation is performed on the data of the channel 4 and the channel 7 of the first cache module to generate R1-2' which is stored to the channel 5 of the second cache module; the averaging operation is performed on the data of the channel 7 and the channel 10 of the first cache module to generate R1-3' which is stored to the channel 8 of the second cache module, and so on.

For example, the data stored in each channel of the second cache module and the data stored in each channel of the third cache module, i.e., R1-1/R1-1'/B1-1'/R1-2/R1-2'/B1-2'/R1-3/R1-3'/B1-3', etc., are sent to the corresponding data signal line of the display panel through the digital-to-analog converter and the amplifier.

For example, if the averaging operation cannot be performed when the last column of pixel data (including R/G/B three columns of sub-pixels) is processed, one more column of pixel data may be sent, and this column of data may be a first column of next source driver, or may be a copy of itself.

The control of data transfer and the interpolation operation is performed by the operation conversion module between the first cache module and the second cache module, and the data of the second cache module and the data retained in the third cache module are output simultaneously, thereby realizing the horizontal resolution expansion of the second batch of data of the first row, and a color arrangement of a set of data obtained by expansion (i.e., M pieces of data composed of the data of the second cache module and the data of the third cache module) is identical to that of a plurality of sub-pixels connected with the second gate scanning signal line G2, and therefore, the expanded data may be transferred to the plurality of sub-pixels connected with the second gate scanning signal line G2.

Fig. 11B illustrates a schematic diagram of transfer of a second row of data corresponding to the pixel architecture shown in Fig. 2 in a source driver provided by at least one embodiment of the present disclosure.

As shown in Fig. 11B, since an arrangement manner of the second row of sub-pixels and a connection manner of the data signal line are both identical to those of the first row, the transfer manner of the second row of data in the source driver is identical to that of the first row of data, which will not be described redundantly here.

For example, the plurality of rows and columns of sub-pixels further include an (i+r)th row of sub-pixels; a first sub-pixel and a second sub-pixel of the ith row of sub-pixels are connected with a first data signal line; and a first sub-pixel and a second sub-pixel of the (i+r)th row of sub-pixels are connected with a second data signal line. The source driver is configured to: in a process of processing the initial data corresponding to the ith row of sub-pixels, cache the N pieces of initial data starting from a first one of the M first cache units; and in a process of processing the initial data corresponding to the (i+r)th row of sub-pixels, cache the N pieces of initial data starting from a second one of the M first cache units; wherein r is a positive integer.

For example, in the pixel architecture shown in Fig. 2, there is a cycle of changing once every two rows in the vertical directly, and four rows form a cycle. In each cycle, the first two rows are connected starting from a first data signal line, and the remaining two rows are connected starting from a second data signal line. Therefore, each of the first two rows of data in each cycle may be cached starting from the first one of the M first cache units; and each of the remaining two rows of data in each cycle may be cached starting from the second one of the M first cache units. In this way, the data is allowed to correspond to physical sub-pixels so that the embodiments of the present disclosure can be applied to the pixel architecture periodically changing in the vertical direction.

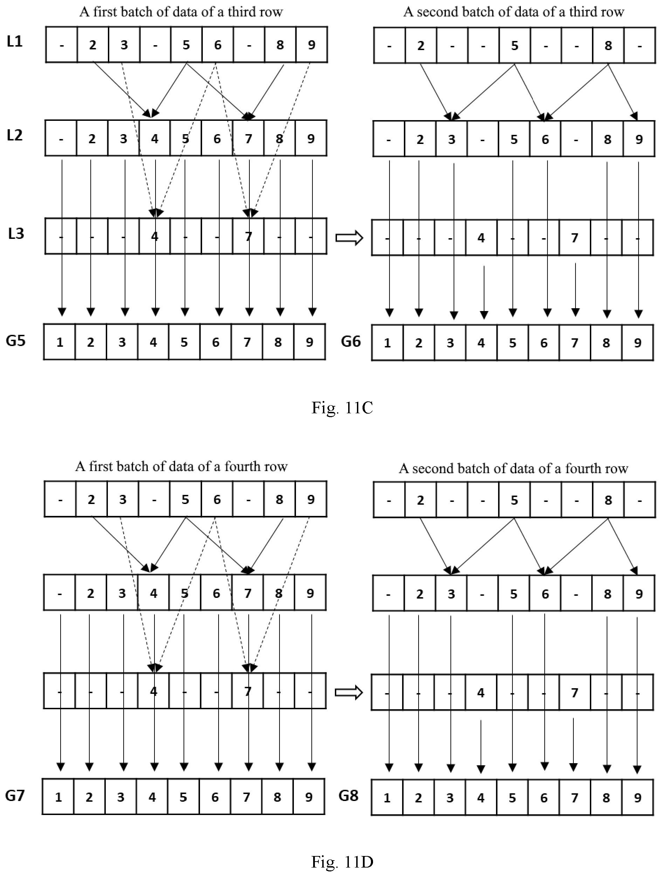

Fig. 11C illustrates a schematic diagram of transfer of a third row of data corresponding to the pixel architecture shown in Fig. 2 in a source driver provided by at least one embodiment of the present disclosure.

As shown in Fig. 11C, a first batch of data of a third row may include sub-pixel data G3-1/B3-1/G3-2/B3-2/G3-3/B3-3/G3-4/B3-4, etc. in the third row shown in Fig. 5, which is sequentially stored in the channel 2/3/5/6/8/9/11/12 of the first cache module. The data of the channels of the first cache module is stored to the corresponding channels of the second cache module. Moreover, the averaging operation is performed on the data of the channel 2 and the channel 5 of the first cache module to generate G3-1' which is stored to the channel 4 of the second cache module; the averaging operation is performed on the data of the channel 5 and the channel 8 of the first cache module to generate G3-2' which is stored to the channel 7 of the second cache module; the averaging operation is performed on the data of the channel 8 and the channel 11 of the first cache module to generate G3-3' which is stored to the channel 10 of the second cache module, and so on.

For example, the averaging operation is performed on the data of the channel 3 and the channel 6 of the first cache module to generate B3-1' which is stored to the channel 4 of the third cache module; the averaging operation is performed on the data of the channel 6 and the channel 9 of the first cache module to generate B3-2' which is stored to the channel 7 of the third cache module; the averaging operation is performed on the data of the channel 9 and the channel 12 of the first cache module to generate B3-3' which is stored to the channel 10 of the third cache module, and so on.

For example, the data stored in each channel of the second cache module, i.e., G3-1/B3-1/G3-1'/G3-2/B3-2/G3-2'/G3-3/B3-3/G3-3', etc., is sent to the corresponding data signal line of the display panel through the digital-to-analog converter and the amplifier. For example, the data of the third cache module is stored continuously and temporarily not transferred down. Based on the above manner, the horizontal resolution expansion of the first batch of data of the third row is realized, and a color arrangement of a set of data obtained by expansion (i.e., the M pieces of data cached to the second cache module) is identical to that of a plurality of sub-pixels connected with the fifth gate scanning signal line G5, and therefore, the expanded data may be transferred to the plurality of sub-pixels connected with the fifth gate scanning signal line G5.

For example, the second batch of data of the third row includes the sub-pixel data R3-1/R3-2/R3-3/R3-4, etc. in the third row shown in Fig. 5, which is sequentially stored in the channel 2/5/8/11 of the first cache module, and so on. The data of the channels of the first cache module is stored to the corresponding channels of the second cache module. Moreover, the averaging operation is performed on the data of the channel 2 and the channel 5 of the first cache module to generate R3-1' which is stored to the channel 3 of the second cache module; the averaging operation is performed on the data of the channel 5 and the channel 8 of the first cache module to generate R3-2' which is stored to the channel 6 of the second cache module; the averaging operation is performed on the data of the channel 8 and the channel 11 of the first cache module to generate R3-3' which is stored to the channel 9 of the second cache module, and so on. For example, the data stored in each channel of the second cache module and the data stored in each channel of the third cache module, i.e., R3-1/R3-1'/B3-1'/R3-2/R3-2'/B3-2'/R3-3/R3-3'/B3-3', etc., are sent to the corresponding data signal line of the display panel through the digital-to-analog converter and the amplifier. Based on the above manner, the horizontal resolution expansion of the second batch of data of the third row is realized, and a color arrangement of a set of data obtained by expansion (i.e., M pieces of data composed of the data of the second cache module and the data of the third cache module) is identical to that of a plurality of sub-pixels connected with the sixth gate scanning signal line G6, and therefore, the expanded data may be transferred to the plurality of sub-pixels connected with the sixth gate scanning signal line G6.

Fig. 11D illustrates a schematic diagram of transfer of a fourth row of data corresponding to the pixel architecture shown in Fig. 2 in a source driver provided by at least one embodiment of the present disclosure.

As shown in Fig. 11D, since an arrangement manner of the fourth row of sub-pixels and a connection manner of the data signal line are both identical to those of the third row, the transfer manner of the fourth row of data in the source driver is identical to that of the third row of data, which will not be described redundantly here.

For example, for the data processing manner of the sub-pixel data of a fifth row and the following rows shown in Fig. 2 in the source driver, a reference may be made to the above Figs. 11A-11D and the related descriptions thereof, which will not be described redundantly here.

Based on the above manner, the horizontal resolution expansion of the pixel architecture as shown in Fig. 2 is realized, and the output data is the double of the received data. Moreover, by controlling the locations of the original data and the interpolation data in the second cache module or the third cache module, the correctness of display is guaranteed.

According to at least one embodiment of the present disclosure, by controlling locations of data stored in various levels of caches, operation methods and output times, the expansion of the horizontal resolution of the display panel of the pixel architecture such as Dual gate can be realized.

According to at least one embodiment of the present disclosure, for the first batch of N pieces of initial data of each row of the dual gate pixel architecture, the transfer manner and the interpolation operation of the first batch of data are controlled by the operation conversion module between the first cache module and the second cache module, thereby realizing the horizontal resolution expansion of the first batch of N pieces of initial data of each row. Moreover, for the second batch of S pieces of initial data of each row of the dual gate pixel architecture, the transfer manner and the interpolation operation of the second batch of data are controlled by the operation conversion module between the first cache module and the second cache module, and the data of the second cache module and the data of the third cache module obtained when processing the first batch of data are output simultaneously, thereby realizing the horizontal resolution expansion of the second batch of S pieces of initial data of each row.

Moreover, at least one embodiment of the present disclosure may also be applied to other types of pixel architectures than the Dual gate pixel architecture.

For example, the operation conversion module includes M first switches, K second switches, and K operation units. Inputs of the M first switches are connected with outputs of the M first cache units, respectively; an output of each first switch is connected to at least one second cache unit and at least one operation unit; and each first switch is configured to turn off the output of the connected first cache units, or output data of the first cache unit to the connected second cache unit, or output the data of the first cache unit to the connected operation unit, according to a control signal. An input of each operation unit is connected to the outputs of at least two first switches, and outputs of the K operation units are connected with inputs of the K second switches, respectively. Each of a first part of the second switches is connected to two second cache units; each of a second part of the second switches is connected to two second cache units and one third cache unit; each of a third part of the second switches is connected to one third cache unit; and each second switch is configured to turn off an output of the connected operation unit, or output data of the operation unit to one of the two connected second cache units, or output the data of the operation unit to the connected third cache unit, according to a control signal; wherein K is a positive integer less than M.

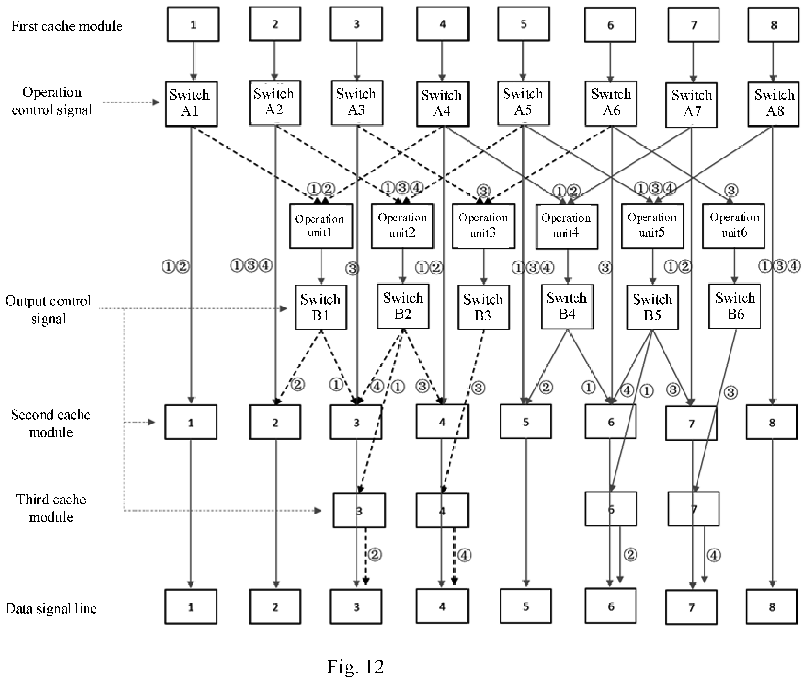

Fig. 12 illustrates a schematic diagram of an operation conversion module provided by at least one embodiment of the present disclosure.

As shown in Fig. 12, each of the switches A1-A8 is a first switch, and each of the switches B1-B8 is a second switch. A group A of switches (including A1-A8) is connected with the first cache module, the operation unit group, and the second cache module, and a group B of switches (including B1-B8) is connected with the operation unit group, the second cache module, and the third cache module. The second cache module and the third cache module pass through the digital-to-analog converter and the amplifier and then is connected with the data signal line of the display substrate.

For example, the group A of switches is connected with an operation control signal, and the group B of switches is connected with an output control signal. The group A of switches controls whether the data of each first cache unit is output, and output to the second cache module or the operation unit, according to the operation control signal. The group B of switches controls whether the operation result of each operation unit is output, which second cache unit the operation result is output to, or which third cache unit the operation result is output to, according to the output control signal.

For example, a jth operation unit of the K operation units is connected with a jth first switch and a (j+3)th first switch. A jth second switch connected with the jth operation unit is connected with a (j+1)th second cache unit, a (j+2)th second cache unit, and one third cache unit. j is a positive integer less than or equal to K.

For example, as shown in Fig. 12, the operation unit 1 is connected with the switch A1 and the switch A4, the operation unit 2 is connected with the switch A2 and the switch A5, the operation unit 3 is connected with the switch A3 and the switch A6, and so on.

For example, the switch B1 is connected with the second cache unit 2 and the second cache unit 3, the switch B2 is connected with the second cache unit 3, the second cache unit 4 and the third cache unit 3, the switch B3 is connected with the third cache unit 4, and so on.

For example, for the first batch of data of each row, the K operation units may be divided into a plurality of first operation units and a plurality of second operation units. Each first operation unit is configured to process a first piece of initial data in two adjacent sub-sets, and each second operation unit is configured to process a second piece of initial data in two adjacent sub-sets.

For example, the controller is further configured to: in a process of processing the first batch of data of each row, control part of the M first switches to output two pieces of initial data in each sub-set to corresponding two second cache units, and output the first piece of initial data in every two adjacent sub-sets to the connected first operation unit to calculate the first interpolation data using the first operation unit; control a second switching unit connected with each first operation unit to output the first interpolation data calculated by the first operation unit to the latter one of two second cache units connected with the second switching unit; output the second piece of initial data in every two adjacent sub-sets to the connected second operation unit to calculate the second interpolation data using the second operation unit; and control a second switching unit connected with each second operation unit to output the second interpolation data calculated by the second operation unit to a third cache unit connected with the second switching unit.

For example, the controller is further configured to: in a process of processing the second batch of data of each row, control part of the M first switches to output each piece of initial data to one corresponding second cache unit, and output every two pieces of initial data to the connected operation unit to calculate the third interpolation data using the operation unit; control a second switching unit to output the calculated third interpolation data to the former one of two second cache units connected with the second switching unit; and control the second cache module and the third cache module to output the cached data simultaneously.

For example, with reference to Fig. 11A and Fig. 12, after the first cache module receives the first batch of data of the first row corresponding to the pixel architecture shown in Fig. 2, the operation conversion module performs an action ① shown in Fig. 12:
the switch A1/A2/A4/A5/A7/A8 of the group A of switches is controlled by the operation control signal to send the data of the channel 1/2/4/5/7/8 of the first cache module to the corresponding channel of the second cache module;
the switches A1/A4/A7 and A2/A5/A8 of the group A of switches are controlled by the operation control signal to send the data of the channels 1/4/7 and 2/5/8 of the first cache module to the corresponding operation units 1/4 and 2/5, respectively;
the switch B1 and the switch B4 of the group B of switches are controlled by the output control signal to send the operation results of the operation units 1 and 4 to the channels 3 and 6 of the second cache module;
the switch 2 and the switch 5 of the group B of switches are controlled by the output control signal to send the operation results of the operation units 2 and 5 to the channels 3 and 6 of the third cache module; and
the second cache module is controlled by the output control signal to send the data to the display panel, and the third cache module is controlled not to send the data.

For example, with reference to Fig. 11A and Fig. 12, after the first cache module receives the second batch of data of the first row corresponding to the pixel architecture shown in Fig. 2, the operation conversion module performs an action ② shown in Fig. 12:
the switch A1/A4/A7 of the group A of switches is controlled by the operation control signal to send the data of the channel 1/4/7 of the first cache module to the corresponding channel of the second cache module;
the switch A1/A4/A7 of the group A of switches is controlled by the operation control signal to send the data of the channel 1/4/7 of the first cache module to the corresponding operation unit 1/4;
the switch B1 and the switch B4 of the group B of switches are controlled by the output control signal to send the operation results of the operation units 1 and 4 to the channels 2 and 5 of the second cache module; and
the second cache module and the third cache module are controlled by the output control signal to send the data to the display panel.

For example, with reference to Fig. 11B and Fig. 12, the action performed when the first cache module receives the second row of data corresponding to the pixel architecture shown in Fig. 2 is the same with the first row.

For example, with reference to Fig. 11C and Fig. 12, after the first cache module receives the first batch of data of the third row corresponding to the pixel architecture shown in Fig. 2, the operation conversion module performs an action ③ shown in Fig. 12:
the switch A2/A3/A5/A6/A8/A9 of the group A of switches is controlled by the operation control signal to send the data of the channel 2/3/5/6/8/9 of the first cache module to the corresponding channel of the second cache module;
the switches A2/A5/A8 and A3/A6/A9 of the group A of switches are controlled by the operation control signal to send the data of the channels 2/5/8 and 3/6/9 of the first cache module to the corresponding operation units 2/5 and 3/6, respectively;
the switch B2 and the switch B5 of the group B of switches are controlled by the output control signal to send the operation results of the operation units 2 and 5 to the channels 4 and 7 of the second cache module;
the switch B3 and the switch B6 of the group B of switches are controlled by the output control signal to send the operation results of the operation units 3 and 6 to the channels 4 and 7 of the third cache module; and
the second cache module is controlled by the output control signal to send the data to the display panel, and the third cache module is controlled not to send the data.

For example, with reference to Fig. 11C and Fig. 12, after the first cache module receives the second batch of data of the third row corresponding to the pixel architecture shown in Fig. 2, the operation conversion module performs an action ④ shown in Fig. 12:
the switch A2/A5/A8 of the group A of switches is controlled by the operation control signal to send the data of the channel 2/5/8 of the first cache module to the corresponding channel of the second cache module;
the switch A2/A5/A8 of the group A of switches is controlled by the operation control signal to send the data of the channel 2/5/8 of the first cache module to the corresponding operation unit 2/5, respectively;
the switch B2 and the switch B5 of the group B of switches are controlled by the output control signal to send the operation results of the operation units 2 and 5 to the channels 3 and 6 of the second cache module; and
the second cache module and the third cache module are controlled by the output control signal to send the data to the display panel.

For example, with reference to Fig. 11D and Fig. 12, the action performed when the first cache module receives the fourth row of data corresponding to the pixel architecture shown in Fig. 2 is the same with the third row.

For example, in some embodiments, the group B of switches may also be controlled by the operation control signal, or the operation control signal and the output control signal may be the same signal and be distinguished by different commands. When the first cache module receives data, the data may not be stored sequentially, and instead stored to a specified location. This may be solved by interpolating virtual data at the front end, or may be achieved by sending an instruction to the source driver for controlling it. Moreover, usually, when the front end sends the data to the source driver, a data transmission rate remains unchanged. This requirement may be met by adding virtual data when sending the second batch of data of each row of pixels.

For example, the application range of the source driver of the embodiments of the present disclosure is wide. In addition to the pixel architecture shown in Fig. 2, the source driver may be applied to expand the horizontal resolution for more types of dual gate pixel architectures. The following description is made by taking the pixel architecture shown in Fig. 3 and the pixel architecture shown in Fig. 4 as examples, respectively.

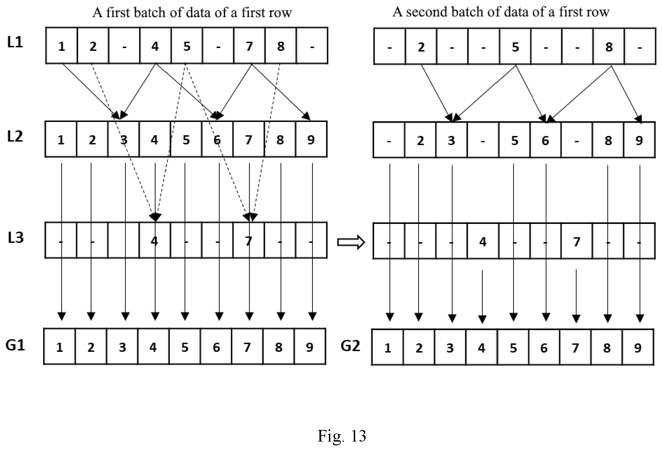

Fig. 13 illustrates a schematic diagram of transfer of a first row of data corresponding to the pixel architecture shown in Fig. 3 in a source driver provided by at least one embodiment of the present disclosure.

As shown in Fig. 13, the first batch of data of the first row includes the sub-pixel data R1-1/B1-1/R1-2/B1-2/R1-3/B1-3 in the first row shown in Fig. 5, which is sequentially stored in the channel 1/2/4/5/7/8 of the first cache module, and so on. The data of each channel of the first cache module is stored to the corresponding channel of the second cache module. Moreover, the averaging operation is performed on the data of the channel 1 and the channel 4 of the first cache module to generate R1-1' which is stored to the channel 3 of the second cache module; the averaging operation is performed on the data of the channel 4 and the channel 7 of the first cache module to generate R1-2' which is stored to the channel 6 of the second cache module; the averaging operation is performed on the data of the channel 7 and the channel 10 of the first cache module to generate R1-3' which is stored to the channel 9 of the second cache module, and so on. Moreover, the averaging operation is performed on the data of the channel 2 and the channel 5 of the first cache module to generate B1-1' which is stored to the channel 4 of the third cache module; the averaging operation is performed on the data of the channel 5 and the channel 8 of the first cache module to generate B1-2' which is stored to the channel 7 of the third cache module; the averaging operation is performed on the data of the channel 8 and the channel 11 of the first cache module to generate B1-3' which is stored to the channel 10 of the third cache module, and so on. The data stored in each channel of the second cache module, i.e., R1-1/B1-1/R1-1'/R1-2/B1-2/R1-2'/R1-3/B1-3/R1-3', etc., is sent to the corresponding data line of the display panel through the digital-to-analog converter and the amplifier. In this case, the data of the third cache module is stored continuously and temporarily not transferred down.

For example, the second batch of data of the first row shown in Fig. 13 includes the sub-pixel data G1-1/G1-2/G1-3 in the first row shown in Fig. 5, which is sequentially stored in the channel 2/5/8 of the first cache module, and so on. The data of each channel of the first cache module is stored to the corresponding channel of the second cache module. Moreover, the averaging operation is performed on the data of the channel 2 and the channel 5 of the first cache module to generate G1-1' which is stored to the channel 3 of the second cache module; the averaging operation is performed on the data of the channel 5 and the channel 8 of the first cache module to generate G1-2' which is stored to the channel 6 of the second cache module; the averaging operation is performed on the data of the channel 8 and the channel 11 of the first cache module to generate G1-3' which is stored to the channel 9 of the second cache module, and so on. The data stored in each channel of the second cache module and the data stored in each channel of the third cache module, i.e., G1-1/G1-1'/B1-1'/G1-2/G1-2'/B1-2'/G1-3/G1-3'/B1-3', etc., are sent to the corresponding data line of the display panel through the digital-to-analog converter and the amplifier.

Other rows of data of the pixel architecture shown in Fig. 3 are sent in the same manner with the first row of data, which will not be described redundantly here.

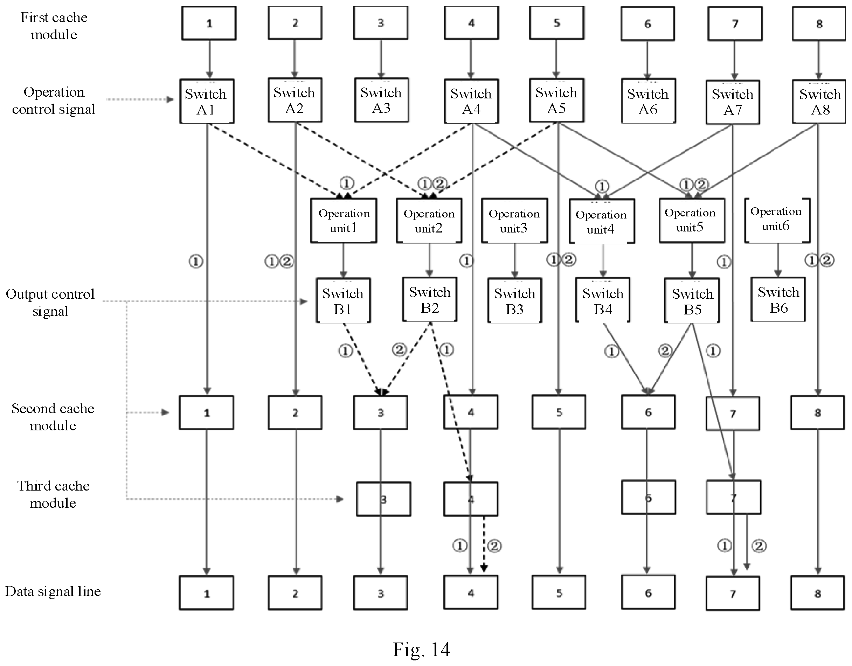

Fig. 14 illustrates a schematic diagram of processing the first row of data corresponding to the pixel architecture shown in Fig. 3 by an operation conversion module provided by at least one embodiment of the present disclosure.

As shown in Fig. 13 and Fig. 14, after the first cache module receives the first batch of data of the first row corresponding to the pixel architecture shown in Fig. 3, the operation conversion module performs an action ① shown in Fig. 14:
the switch A1/A2/A4/A5/A7/A8 of the group A of switches is controlled by the operation control signal to send the data of the channel 1/2/4/5/7/8 of the first cache module to the corresponding channel of the second cache module;
the switches A1/A4/A7 and A2/A5/A8 of the group A of switches are controlled by the operation control signal to send the data of the channels 1/4/7 and 2/5/8 of the first cache module to the corresponding operation units 1/4 and 2/5, respectively;
the switch B1 and the switch B4 of the group B of switches are controlled by the output control signal to send the operation results of the operation units 1 and 4 to the channels 3 and 6 of the second cache module;
the switch B2 and the switch B5 of the group B of switches are controlled by the output control signal to send the operation results of the operation units 2 and 5 to the channels 4 and 7 of the third cache module; and
the second cache module is controlled by the output control signal to send the data to the display panel, and the third cache module is controlled not to send the data temporarily.

After the first cache module receives the second batch of data of the first row corresponding to the pixel architecture shown in Fig. 3, the operation conversion module performs an action ② shown in Fig. 14:
the switch A2/A5/A8 of the group A of switches is controlled by the operation control signal to send the data of the channel 2/5/8 of the first cache module to the corresponding channel of the second cache module;
the switch A2/A5/A8 of the group A of switches is controlled by the operation control signal to send the data of the channel 2/5/8 of the first cache module to the corresponding operation unit 2/5, respectively;
the switch B2 and the switch B5 of the group B of switches are controlled by the output control signal to send the operation results of the operation units 2 and 5 to the channels 3 and 6 of the second cache module; and
the second cache module and the third cache module are controlled by the output control signal to send the data to the display panel.

Other rows of data are sent in the same manner with the first row of data, which will not be described redundantly here.

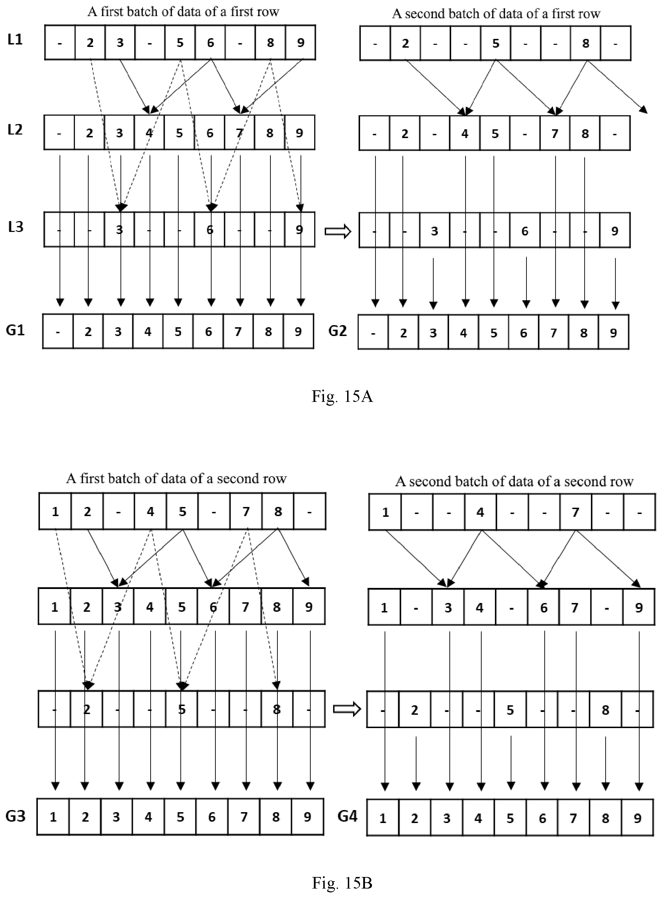

Fig. 15A illustrates a schematic diagram of transfer of a first row of data corresponding to the pixel architecture shown in Fig. 4 in a source driver provided by at least one embodiment of the present disclosure.

As shown in Fig. 15A, the first batch of data of the first row includes the sub-pixel data R1-1/B1-1/R1-2/B1-2/R1-3/B1-3 in the first row shown in Fig. 5, which is sequentially stored in the channel 2/3/5/6/8/9 of the first cache module. The data of the channels of the first cache module is stored to the corresponding channels of the second cache module. Moreover, the averaging operation is performed on the data of the channel 3 and the channel 6 of the first cache module to generate B1-1' which is stored to the channel 4 of the second cache module; the averaging operation is performed on the data of the channel 6 and the channel 9 of the first cache module to generate B1-2' which is stored to the channel 7 of the second cache module; the averaging operation is performed on the data of the channel 9 and the channel 12 of the first cache module to generate B1-3' which is stored to the channel 10 of the second cache module, and so on. The averaging operation is performed on the data of the channel 2 and the channel 5 of the first cache module to generate R1-1' which is stored to the channel 3 of the third cache module; the averaging operation is performed on the data of the channel 5 and the channel 8 of the first cache module to generate R1-2' which is stored to the channel 6 of the third cache module; the averaging operation is performed on the data of the channel 8 and the channel 11 of the first cache module to generate R1-3' which is stored to the channel 9 of the third cache module, and so on. The data stored in each channel of the second cache module, i.e., R1-1/B1-1/B1-1'/R1-2/B1-2/B1-2'/R1-3/B1-3/B1-3', etc., is sent to the corresponding data line of the display panel through the digital-to-analog converter and the amplifier. In this case, the data of the third cache module is stored continuously and temporarily not transferred down.

The second batch of data of the first row shown in Fig. 15A includes the sub-pixel data G1-1/G1-2/G1-3 in the first row shown in Fig. 5, which is sequentially stored in the channel 2/5/8 of the first cache module. The data of each channel of the first cache module is stored to the corresponding channel of the second cache module. Moreover, the averaging operation is performed on the data of the channel 2 and the channel 5 of the first cache module to generate G1-1' which is stored to the channel 4 of the second cache module; the averaging operation is performed on the data of the channel 5 and the channel 8 of the first cache module to generate G1-2' which is stored to the channel 7 of the second cache module; the averaging operation is performed on the data of the channel 8 and the channel 11 of the first cache module to generate G1-3' which is stored to the channel 10 of the second cache module, and so on. The data stored in each channel of the second cache module and the data stored in each channel of the third cache module, i.e., G1-1/R1-1'/G1-1'/G1-2/R1-2'/G1-2'/G1-3/R1-3'/G1-3', etc., are sent to the corresponding data line of the display panel through the digital-to-analog converter and the amplifier.

Fig. 15B illustrates a schematic diagram of transfer of a second row of data corresponding to the pixel architecture shown in Fig. 4 in a source driver provided by at least one embodiment of the present disclosure.

As shown in Fig. 15B, the first batch of data of the second row includes the sub-pixel data R2-1/B2-1/R2-2/B2-2/R2-3/B2-3 in the first row shown in Fig. 5, which is sequentially stored in the channel 1/2/4/5/7/8 of the first cache module. The data of the channels of the first cache module is stored to the corresponding channels of the second cache module. Moreover, the averaging operation is performed on the data of the channel 2 and the channel 5 of the first cache module to generate B2-1' which is stored to the channel 3 of the second cache module; the averaging operation is performed on the data of the channel 5 and the channel 8 of the first cache module to generate B2-2' which is stored to the channel 6 of the second cache module; the averaging operation is performed on the data of the channel 8 and the channel 11 of the first cache module to generate B3-3' which is stored to the channel 9 of the second cache module, and so on. Moreover, the averaging operation is performed on the data of the channel 1 and the channel 4 of the first cache module to generate R2-1' which is stored to the channel 2 of the third cache module; the averaging operation is performed on the data of the channel 4 and the channel 7 of the first cache module to generate R2-2' which is stored to the channel 5 of the third cache module; the averaging operation is performed on the data of the channel 7 and the channel 10 of the first cache module to generate R2-3' which is stored to the channel 8 of the third cache module, and so on. The data stored in each channel of the second cache module, i.e., R2-1/B2-1/B2-1'/R2-2/B2-2/B2-2'/R2-3/B2-3/B2-3', etc., is sent to the corresponding data line of the display panel through the digital-to-analog converter and the amplifier. In this case, the data of the third cache module is stored continuously and temporarily not transferred down.

For example, the second batch of data of the second row shown in Fig. 15B includes the sub-pixel data G2-1/G2-2/G2-3 in the first row shown in Fig. 5, which is sequentially stored in the channel 1/4/7 of the first cache module, and so on. The data of the channels of the first cache module is stored to the corresponding channels of the second cache module. Moreover, the averaging operation is performed on the data of the channel 1 and the channel 4 of the first cache module to generate G2-1' which is stored to the channel 3 of the second cache module; the averaging operation is performed on the data of the channel 4 and the channel 7 of the first cache module to generate G2-2' which is stored to the channel 6 of the second cache module; the averaging operation is performed on the data of the channel 7 and the channel 10 of the first cache module to generate G2-3' which is stored to the channel 9 of the second cache module, and so on. The data stored in each channel of the second cache module and the data stored in each channel of the third cache module, i.e., G2-1/R2-1'/G2-1'/G2-2/R2-2'/G2-2'/G2-3/R2-3'/G2-3', etc., are sent to the corresponding data line of the display panel through the digital-to-analog converter and the amplifier.

Other rows of data are sent in the same manner with the first row of data and the second row of data, which will not be described redundantly.

The data transfer under the pixel architecture of Fig. 3 may be achieved by the architecture shown in Fig. 12-3.

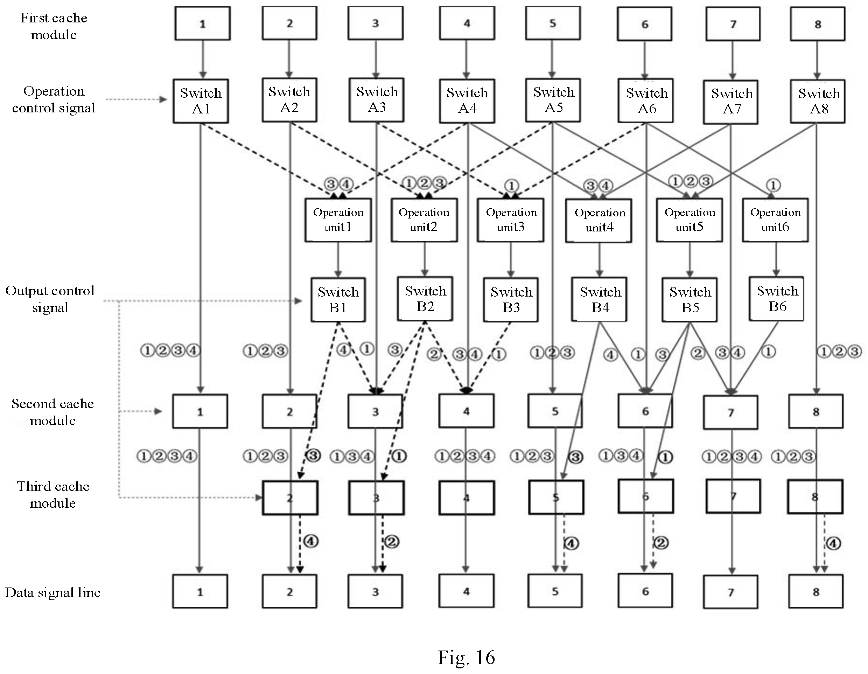

Fig. 16 illustrates a schematic diagram of processing a first row of data and a second row of data corresponding to the pixel architecture shown in Fig. 4 by an operation conversion module provided by at least one embodiment of the present disclosure.

As shown in Fig. 15A and Fig. 16, after the first cache module receives the first batch of data of the first row corresponding to the pixel architecture shown in Fig. 4, the operation conversion module performs an action (1) shown in Fig. 16:
the switch A2/A3/A5/A6/A8/A9 of the group A of switches is controlled by the operation control signal to send the data of the channel 2/3/5/6/8/9 of the first cache module to the corresponding channel of the second cache module;
the switches A2/A5/A8 and A3/A6/A9 of the group A of switches are controlled by the operation control signal to send the data of the channels 2/5/8 and 3/6/9 of the first cache module to the corresponding operation units 2/5 and 3/6, respectively;
the switch B3 and the switch B6 of the group B of switches are controlled by the output control signal to send the operation results of the operation units 3 and 6 to the channels 4 and 7 of the second cache module; and
the switch B2 and the switch B5 of the group B of switches are controlled by the output control signal to send the operation results of the operation units 2 and 5 to the channels 3 and 6 of the third cache module; and
the second cache module is controlled by the output control signal to send the data to the display panel, and the third cache module is controlled not to send the data temporarily.

As shown in Fig. 15A and Fig. 16, after the first cache module receives the second batch of data of the first row corresponding to the pixel architecture shown in Fig. 4, the operation conversion module performs an action ② shown in Fig. 16:
the switch A2/A5/A8 of the group A of switches is controlled by the operation control signal to send the data of the channel 2/5/8 of the first cache module to the corresponding channel of the second cache module;
the switch A2/A5/A8 of the group A of switches is controlled by the operation control signal to send the data of the channel 2/5/8 of the first cache module to the corresponding operation unit 2/5, respectively;
the switch B2 and the switch B5 of the group B of switches are controlled by the output control signal to send the not operation results of the operation units 2 and 5 to the channels 4 and 7 of the second cache module; and
the second cache module and the third cache module are controlled by the output control signal to send the data to the display panel.

As shown in Fig. 15B and Fig. 16, after the first cache module receives the first batch of data of the second row corresponding to the pixel architecture shown in Fig. 4, the operation conversion module performs an action ③ shown in Fig. 16:
the switch A1/A2/A4/A5/A7/A8 of the group A of switches is controlled by the operation control signal to send the data of the channel 1/2/4/5/7/8 of the first cache module to the corresponding channel of the second cache module;
the switches A2/A5/A8 and A1/A4/A7 of the group A of switches are controlled by the operation control signal to send the data of the channels 2/5/8 and 1/4/7 of the first cache module to the corresponding operation units 2/5 and 1/4, respectively;
the switch B2 and the switch B5 of the group B of switches are controlled by the output control signal to send the operation results of the operation units 2 and 5 to the channels 3 and 6 of the second cache module; and
the switch B1 and the switch B4 of the group B of switches are controlled by the output control signal to send operation results of the operation units 1 and 4 to the channels 2 and 5 of the third cache module; and
the second cache module is controlled by the output control signal to send the data to the display panel, and the third cache module is controlled not to send the data temporarily.

As shown in Fig. 15B and Fig. 16, after the first cache module receives the second batch of data of the second row corresponding to the pixel architecture shown in Fig. 4, the operation conversion module performs an action ④ shown in Fig. 16:
the switch A1/A4/A7 of the group A of switches is controlled by the operation control signal to send the data of the channel 1/4/7 of the first cache module to the corresponding channel of the second cache module;
the switch A1/A4/A7 of the group A of switches is controlled by the operation control signal to send the data of the channel 1/4/7 of the first cache module to the corresponding operation unit 1/4;
the switch B1 and the switch B4 of the group B of switches are controlled by the output control signal to send the operation results of the operation units 1 and 4 to the channels 3 and 6 of the second cache module; and
the second cache module and the third cache module are controlled by the output control signal to send the data to the display panel.

Other rows of data are sent in the same manner with the first row of data and the second row of data, which will not be described redundantly.

At least one embodiment of the present disclosure provides a hardware super resolution technology applicable to the Dual gate pixel architecture, including the display substrate and the source driver of the Dual gate pixel architecture. Compared with the existing source driver, the operation conversion module, the third cache module, the operation control signal and the output control signal are added. By controlling locations of data stored in various levels of caches, operation methods and output times, the expansion of the horizontal resolution of the display panel of the Dual gate pixel architecture is realized.

According to at least one embodiment of the present disclosure, the display panel has the following architecture features: 3 consecutive sub-pixel units of the same color in the same row of pixels are connected to the same gate line or connected to two gate lines; and when they are connected to two gate lines, the first and last sub-pixel units need to be connected to the gate line scanned first, and the middle sub-pixel unit is connected to the gate line scanned later.

According to at least one embodiment of the present disclosure, the third cache module and the second cache module are parallel, and are both located behind an operation converter and in front of a digital-to-analog converter.

According to at least one embodiment of the present disclosure, the number of channels used by the third cache module in each data transfer process is less than that used by the second cache module, and is about 1/3 of the number of channels used by the second cache module.

According to at least one embodiment of the present disclosure, when the storage channels of the first cache module receive display data, the display data is not arranged sequentially, and is spaced apart with specified locations.

According to at least one embodiment of the present disclosure, the operation converter performs an operation on part of channels of the specified first cache module and performs direct transfer on a specified part of channels. The directly transferred data is only stored in the second cache module, and the operation result may be stored in the specified second cache module and/or third cache module.

According to at least one embodiment of the present disclosure, the data corresponding two consecutive gate scanning signal lines corresponding to each row of pixels of the display panel may be subjected in part to an operation, wherein the data corresponding to the first gate scanning signal line may be simultaneously stored in the second cache module and/or the third cache module after being subjected to the operation, and the data corresponding to the second gate scanning signal line is only stored in the second cache module.

According to at least one embodiment of the present disclosure, the data stored in the third cache module is not sent when the first gate line is driven, and instead sent when the second gate line is driven.

At least one embodiment of the present disclosure further provides an electronic device including the display apparatus provided by any embodiment of the present disclosure. For example, the electronic device may include any electronic product having the display function such as a mobile phone, a tablet computer, a television, a display, a notebook computer, a digital photo frame, and a navigator.

At least one embodiment of the present disclosure further provides a control method for a display apparatus. The display apparatus includes a display substrate and a source driver. The display substrate includes a plurality of rows and columns of sub-pixels arranged in an array, a plurality of gate scanning signal lines, and M data signal lines. The plurality of rows and columns of sub-pixels include an ith row of sub-pixels. A plurality of pieces of initial data corresponding to the ith row of sub-pixels are divided into a first set of initial data and a second set of initial data. The first set of initial data includes N pieces of initial data, and the second set of initial data includes S pieces of initial data.

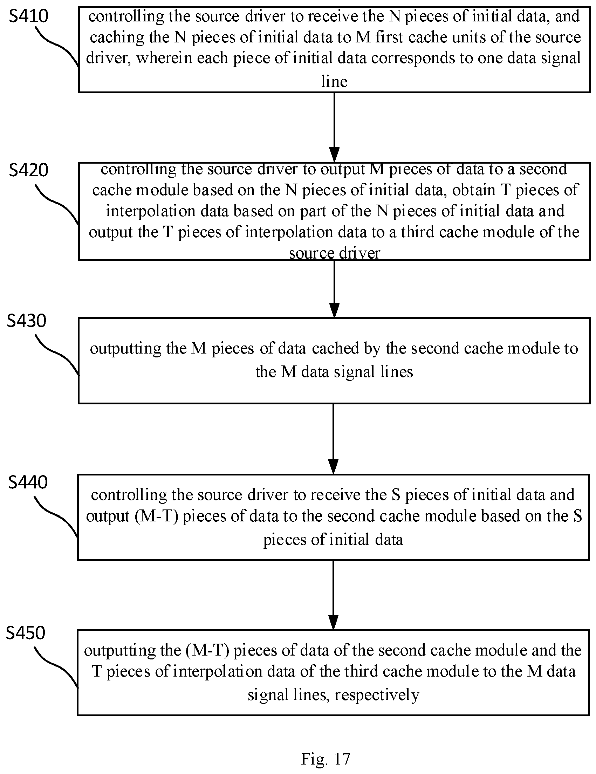

Fig. 17 illustrates a flowchart of a control method for a display apparatus provided by at least one embodiment of the present disclosure.

As shown in Fig. 17, the control method may include steps S410 to S450.

In step S410, controlling the source driver to receive the N pieces of initial data, and caching the N pieces of initial data to M first cache units of the source driver, wherein each piece of initial data corresponds to one data signal line.

In step S420, controlling the source driver to output M pieces of data to a second cache module based on the N pieces of initial data, obtain T pieces of interpolation data based on part of the N pieces of initial data and output the T pieces of interpolation data to a third cache module of the source driver.

In step S430, outputting the M pieces of data cached by the second cache module to the M data signal lines.

In step S440, controlling the source driver to receive the S pieces of initial data and output (M-T) pieces of data to the second cache module based on the S pieces of initial data

In step S450, outputting the (M-T) pieces of data of the second cache module and the T pieces of interpolation data of the third cache module to the M data signal lines, respectively.

According to the control method of at least one embodiment of the present disclosure, by controlling locations of data stored in various levels of caches, the operation method and the output time, the expansion of the horizontal resolution of the display panel of the pixel architecture such as Dual gate can be realized.

For the control method of the embodiments of the present disclosure, a reference may be made to the related description in the foregoing embodiments, which will not be repeated here.

At least one embodiment of the present disclosure further provides an electronic device. The electronic device includes a processor and a memory. The memory stores one or more computer program modules. The one or more computer program modules are configured to be executed by the processor and cause the processor to implement the control method described above.

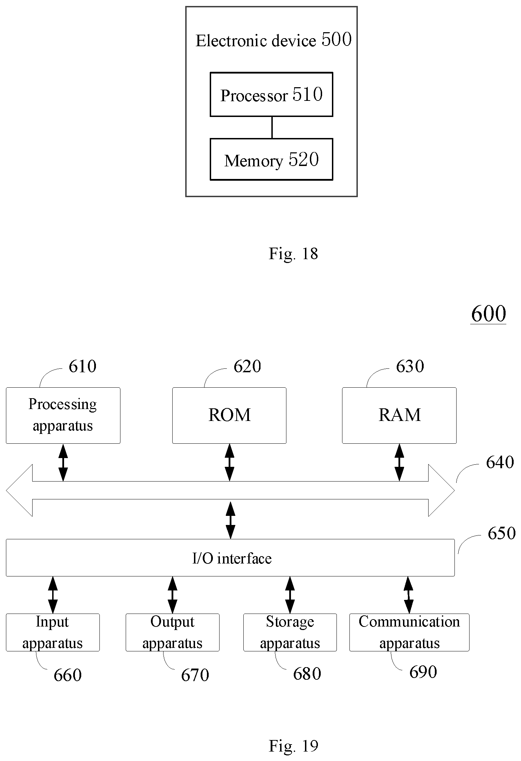

Fig. 18 is a schematic block diagram of an electronic device provided in some embodiments of the present disclosure. As shown in Fig. 18, the electronic device 500 includes a processor 510 and a memory 520. The memory 520 stores non-transitory computer-readable instructions (e.g., one or more computer program modules). The processor 510 is configured to execute the non-transitory computer-readable instructions. The non-transitory computer-readable instructions, when executed by the processor 510, cause the processor to implement one or more steps of the control method described above. The memory 520 and the processor 510 may be interconnected by a bus system and/or a connection mechanism in other form (not shown). For the specific implementation of each step of the control method and related explanatory contents, a reference may be made to the embodiments of the control method described above, which will not be redundantly described here.

It should be noted that the components of the electronic device 500 shown in Fig. 18 are merely exemplary and non-limiting. According to actual application requirements, the electronic device 500 may further have other components.

For example, the processor 510 and the memory 520 may be in direct or indirect communication with each other.

For example, the processor 510 and the memory 520 may be in communication over a network. The network may include a wireless network, a wired network, and/or any combination of the wireless network and the wired network. The processor 510 and the memory 520 may also be in communication with each other through a system bus, which will not be limited in the present disclosure.

For example, the processor 510 and the memory 520 may be disposed on a server (or a cloud).

For example, the processor 510 may control other components in the electronic device 500 to execute expected functions. For example, the processor 510 may be a central processing unit (CPU), a graphics processing unit (GPU) or a processing unit in other form having the data processing capability and/or the program executing capability. For example, the CPU may be an X86 or ARM architecture or the like. The processor 510 may be a general-purpose processor or a special purpose processor and may control other components in the electronic device 500 to perform desired functions.

For example, the memory 520 may include any combination of one or more computer program products. The computer program products may include computer-readable storage mediums in various forms, e.g., a volatile memory and/or a nonvolatile memory. The volatile memory may include, for example, a random-access memory (RAM) and/or a cache, etc. The nonvolatile memory may include, for example, a read only memory (ROM), a hard disk, an erasable programmable read-only memory (EPROM), a compact disk read-only memory (CD-ROM), a USB memory, a flash memory, etc. One or more computer program modules may be stored on the computer-readable storage medium, and the processor 510 may run the one or more computer program modules to realize various functions of the electronic device 500. Various application programs and various kinds of data as well as various kinds of data used and/or generated by application programs and the like may also be stored on the computer-readable storage medium.

For example, in some embodiments, the electronic device 500 may be a mobile phone, a tablet computer, a television, a display, a notebook computer, a wearable electronic device, a smart home device, etc. For example, the electronic device 500 may include a display apparatus.

It needs to be noted that in the embodiments of the present disclosure, the specific functions and the technical effects of the electronic device 500 may be known with reference to the above description regarding the control method, which will not be described here redundantly.

Fig. 19 is a schematic block diagram of another electronic device provided by some embodiments of the present disclosure. For example, the electronic device 600 is adapted to, for example, control the control method provided in the embodiments of the present disclosure. The electronic device 600 may be a terminal device or the like. It needs to be noted that the electronic device 600 shown in Fig. 19 is merely an example and would not pose any limitation on the functions and the range of use of the embodiments of the present disclosure.

As shown in Fig. 19, the electronic device 600 may include a processing apparatus (e.g., a central processing unit, or a graphics processing unit) 610, which can perform various suitable actions and processing according to a program stored on a read-only memory (ROM) 620 or a program loaded from a storage apparatus 680 into a random-access memory (RAM) 630. The RAM 630 further stores various programs and data required for operations of the electronic device 600. The processing apparatus 610, the ROM 620, and the RAM 630 are interconnected by a bus 640. An input/output (I/O) interface 650 is also connected to the bus 640.

Usually, the following apparatuses may be connected to the I/O interface 650: an input apparatus 660 including, for example, a touch screen, a touch pad, a keyboard, a mouse, a camera, a microphone, an accelerometer, and a gyroscope; an output apparatus 670 including, for example, a liquid crystal display (LCD), a loudspeaker, and a vibrator; a storage apparatus 680 including, for example, a magnetic tape and a hard disk; and a communication apparatus 690. The communication apparatus 690 may allow the electronic device 600 to be in wireless or wired communication with other electronic devices to exchange data. While Fig. 19 illustrates the electronic device 600 having various apparatuses, it is to be understood that all the illustrated apparatuses are not necessarily implemented or included. The electronic device 600 may alternatively implement or have more or less apparatuses.

For example, according to the embodiments of the present disclosure, the control method described above may be implemented as a computer software program. For example, an embodiment of the present disclosure provides a computer program product, which includes a computer program carried on a non-transitory computer-readable medium. The computer program includes a program code for carrying out the control method described above. In such an embodiment, the computer program may be downloaded online through a communication apparatus 690 and installed, or installed from a storage apparatus 680, or installed from an ROM 620. When the computer program is executed by a processing apparatus 610, the functions defined in the control method provided in the embodiments of the present disclosure may be realized.

At least one embodiment of the present disclosure further provides a computer-readable storage medium for storing non-transitory computer-readable instructions. The non-transitory computer-readable instructions may, when executed by a computer, implement the control method described above.

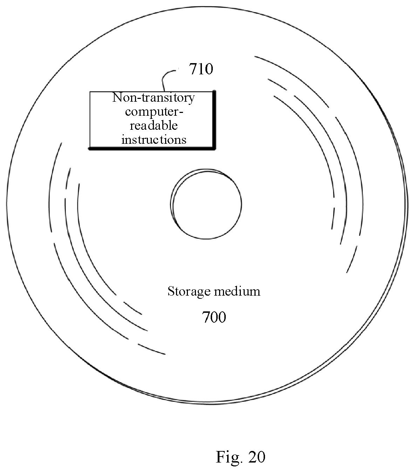

Fig. 20 is a schematic diagram of a storage medium provided by some embodiments of the present disclosure. As shown in Fig. 20, the storage medium 700 stores non-transitory computer-readable instructions 710. For example, when the non-transitory computer-readable instructions 710 are executed by a computer, one or more steps of the control method described above are performed.

For example, the storage medium 700 may be applied to the electronic device 500 described above. For example, the storage medium 700 may be a memory 520 in the electronic device 500 shown in Fig. 18. For example, the related description regarding the storage medium 700 may be known with reference to the corresponding description of the memory 520 in the electronic device 500 shown in Fig. 18, which will not be described here redundantly.

The above description is only related to preferred embodiments of the present disclosure and an explanation of the technical principles applied. Technicians in the field should understand that the scope of disclosure referred herein is not limited to technical solutions formed by specific combinations of the above technical features, and should also cover other technical solutions formed by arbitrary combinations of the above technical features or their equivalent features without departing from the above disclosed concept. For example, a technical solution formed by replacing the above features with (but not limited to) technical features with similar functions disclosed in the present disclosure.

In addition, although the operations are depicted in a specific order, this should not be understood as requiring these operations to be executed in the specific order shown or in a sequential order. Under certain circumstances, multitasking and parallel processing may be advantageous. Similarly, although several specific implementation details are included in the above discussion, they should not be interpreted as limiting the scope of the present disclosure. Certain features described in the context of individual embodiments can also be combined and implemented in a single embodiment. On the contrary, various features described in the context of a single embodiment can also be implemented individually or in any suitable sub-combination in multiple embodiments.

Although the subject matter has been described using language specific to structural features and/or method logic actions, it should be understood that the subject matter defined in the appended claims is not necessarily limited to the specific features or actions described above. On the contrary, the specific features and actions described above are merely exemplary forms of implementing the claims.

With respect to the present disclosure, there are several points that need to be clarified:
(1) The accompanying drawings of embodiments of the present disclosure only relate to the structures involved in the disclosed embodiments, and other structures can refer to conventional designs.
(2) In the absence of conflicts, the disclosed embodiments and their features can be combined with each other to obtain new embodiments.

The above is only specific implementations of the present disclosure, but the scope of protection of the present disclosure is not limited to this. The scope of protection of the present disclosure should be based on the scope of protection of the claims

## Claims

1. A display apparatus, comprising:
a display substrate comprising a plurality of rows and columns of sub-pixels arranged in an array, a plurality of gate scanning signal lines, and M data signal lines, wherein the plurality of rows and columns of sub-pixels comprise an ith row of sub-pixels; a plurality of pieces of initial data corresponding to the ith row of sub-pixels are divided into a first set of initial data and a second set of initial data; the first set of initial data comprises N pieces of initial data, and the second set of initial data comprises S pieces of initial data; and
a source driver comprising:
a first cache module comprising M first cache units configured to cache the N pieces of initial data or the S pieces of initial data, wherein each piece of initial data corresponds to one data signal line;
a second cache module comprising at least M second cache units;
a third cache module comprising a plurality of third cache units;
an operation conversion module configured to receive the N pieces of initial data, output M pieces of data to the second cache module based on the N pieces of initial data according to a control signal, obtain T pieces of interpolation data based on part of the N pieces of initial data and output the T pieces of interpolation data to the third cache module; and
an output module configured to output the M pieces of data of the second cache module to the M data signal lines, respectively;
wherein the operation conversion module is further configured to receive the S pieces of initial data and output (M-T) pieces of data to the second cache module based on the S pieces of initial data according to a control signal; and
the output module is further configured to output the (M-T) pieces of data of the second cache module and the T pieces of interpolation data of the third cache module to the M data signal lines, respectively;
wherein M is a positive integer greater than 2; N and S are both positive integers less than M; and T is a positive integer less than N.

2. The display apparatus according to claim 1, wherein,
the N pieces of initial data are stored at intervals in the M first cache units; and
the operation conversion module is further configured to:
send the N pieces of initial data to corresponding N second cache units according to the control signal;
calculate (M-N) pieces of first interpolation data based on Q pieces of initial data of the N pieces of initial data, and send the (M-N) pieces of first interpolation data to (M-N) second cache units other than the N second cache units; and
calculate T pieces of second interpolation data based on P pieces of initial data of the N pieces of initial data, and output the T pieces of second interpolation data to T third cache units.

3. The display apparatus according to claim 2, wherein,
the S pieces of initial data are stored at intervals in the M first cache units;
the operation conversion module is further configured to:
send the S pieces of initial data to corresponding S second cache units according to the control signal; and
calculate (M-T-S) pieces of third interpolation data based on the S pieces of initial data, and send the (M-T-S) pieces of third interpolation data to (M-T-S) second cache units, respectively; and
the output module is further configured to output the T pieces of interpolation data of the third cache module and the S pieces of initial data and the (M-T-S) pieces of third interpolation data in the second cache module to the M data signal lines, respectively.

4. The display apparatus according to any one of claims 1-3, wherein,
each row of the plurality of rows and columns of sub-pixels comprises sub-pixels of a plurality of colors that are arranged cyclically;
every two gate scanning signal lines of the plurality of gate scanning signal lines are connected to one row of sub-pixels, and each of the M data signal lines is connected to two columns of sub-pixels; and
two sub-pixels connected to the same data signal line and respectively connected to two adjacent gate scanning signal lines are sub-pixels of different colors.

5. The display apparatus according to claim 4, wherein the sub-pixels of the plurality of colors comprise a first kind of sub-pixel, a second kind of sub-pixel, and a third kind of sub-pixel;
the first set of initial data comprises initial data corresponding to the first kind of sub-pixel and initial data corresponding to the second kind of sub-pixel; and
the second set of initial data comprises initial data corresponding to the third kind of sub-pixel.

6. The display apparatus according to any one of claims 1-5, wherein the operation conversion module comprises M first switches, K second switches, and K operation units;
inputs of the M first switches are connected with outputs of the M first cache units, respectively; an output of each first switch is connected to at least one second cache unit and at least one operation unit; each first switch is configured to turn off the output of the connected first cache units, or output data of the first cache unit to the connected second cache unit, or output the data of the first cache unit to the connected operation unit, according to a control signal;
an input of each operation unit is connected to the outputs of at least two first switches, and outputs of the K operation units are connected with inputs of the K second switches, respectively;
each of a first part of the second switches is connected to two second cache units; each of a second part of the second switches is connected to two second cache units and one third cache unit; each of a third part of the second switches is connected to one third cache unit; and each second switch is configured to turn off an output of the connected operation unit, or output data of the operation unit to one of the two connected second cache units, or output the data of the operation unit to the connected third cache unit, according to a control signal; and
wherein K is a positive integer less than M.

7. The display apparatus according to claim 3, wherein,
every two pieces of initial data of the N pieces of initial data are stored as a sub-set in two adjacent first cache units, and every two sub-sets are spaced apart by one first cache unit;
every two adjacent pieces of initial data of the S pieces of initial data are spaced apart by two first cache units;
a jth operation unit of the K operation units is connected with a jth first switch and a (j+3)th first switch;
a jth second switch connected with the jth operation unit is connected with a (j+1)th second cache unit, a (j+2)th second cache unit, and one third cache unit; and
wherein j is a positive integer less than or equal to K.

8. The display apparatus according to claim 7, wherein the source driver further comprises a controller configured to:
in a process of processing the first set of initial data, control the operation conversion module to output the two pieces of initial data in each sub-set to corresponding two second cache units;
control the operation conversion module to calculate one piece of first interpolation data based on a first piece of data in every two adjacent sub-sets to obtain the (M-N) pieces of first interpolation data, and output the (M-N) pieces of first interpolation data to the (M-N) second cache units;
control the operation conversion module to calculate one piece of second interpolation data based on a second piece of data in every two adjacent sub-sets to obtain the T pieces of second interpolation data, and output the T pieces of second interpolation data to the T third cache units; and
control the output module to output the M pieces of data of the second cache module.

9. The display apparatus according to claim 7 or 8, wherein the controller is further configured to:
in a process of processing the second set of initial data, control the operation conversion module to output the S pieces of initial data in the first cache module to corresponding S second cache units, respectively;
control the operation conversion module to calculate one piece of third interpolation data based on every two adjacent pieces of initial data in the first cache module, and output each piece of third interpolation data to one second cache unit; and
control the output module to output the (M-T) pieces of data of the second cache units and the T pieces of second interpolation data of the third cache units to the M data signal lines, respectively.

10. The display apparatus according to any one of claims 1 to 9, wherein the plurality of rows and columns of sub-pixels further comprise an (i+r)th row of sub-pixels; a first sub-pixel and a second sub-pixel of the ith row of sub-pixels are connected with a first data signal line; and a first sub-pixel and a second sub-pixel of the (i+r)th row of sub-pixels are connected with a second data signal line; and
the source driver is configured to:
in a process of processing the initial data corresponding to the ith row of sub-pixels, cache the N pieces of initial data starting from a first one of the M first cache units; and
in a process of processing the initial data corresponding to the (i+r)th row of sub-pixels, cache the N pieces of initial data starting from a second one of the M first cache units; and
wherein r is a positive integer.

11. The display apparatus according to any one of claims 1 to 10, wherein the output module comprises:
a digital-to-analog converter configured to convert a signal corresponding to the M pieces of data to an analog driving signal; and
an amplifier configured to amplify the analog driving signal and then output the amplified analog driving signal to the M data signal lines.

12. An electronic device, comprising the display apparatus according to any one of claims 1 to 11.

13. A control method for a display apparatus, wherein the display apparatus comprises a display substrate and a source driver; the display substrate comprises a plurality of rows and columns of sub-pixels arranged in an array, a plurality of gate scanning signal lines, and M data signal lines; the plurality of rows and columns of sub-pixels comprise an ith row of sub-pixels; a plurality of pieces of initial data corresponding to the ith row of sub-pixels are divided into a first set of initial data and a second set of initial data; the first set of initial data comprises N pieces of initial data, and the second set of initial data comprises S pieces of initial data; wherein the control method comprises:
controlling the source driver to receive the N pieces of initial data, and caching the N pieces of initial data to M first cache units of the source driver, wherein each piece of initial data corresponds to one data signal line;
controlling the source driver to output M pieces of data to a second cache module based on the N pieces of initial data, obtain T pieces of interpolation data based on part of the N pieces of initial data and output the T pieces of interpolation data to a third cache module of the source driver;
outputting the M pieces of data cached by the second cache module to the M data signal lines;
controlling the source driver to receive the S pieces of initial data and output (M-T) pieces of data to the second cache module based on the S pieces of initial data; and
outputting the (M-T) pieces of data of the second cache module and the T pieces of interpolation data of the third cache module to the M data signal lines, respectively.

14. An electronic device, comprising:
a processor; and
a memory storing one or more computer program modules;
wherein the one or more computer program modules are configured to be executed by the processor to implement the control method according to claim 13.

15. A computer-readable storage medium with non-transitory computer-readable instructions stored thereon, wherein the non-transitory computer-readable instructions, when executed by a computer, cause the control method according to claim 13 to be implemented.
